(19) Europäisches Patentamt
European Patent Office
Office européen des brevets

(11) **EP 4 761 384 A1**

(12) **EUROPEAN PATENT APPLICATION**
published in accordance with Art. 153(4) EPC

(43) Date of publication:
**17.06.2026 Bulletin 2026/25**

(21) Application number: **23948014.8**

(22) Date of filing: **09.08.2023**

(51) International Patent Classification (IPC):
**H04W 52/24** (2009.01)

(52) Cooperative Patent Classification (CPC):
**H04W 52/24**

(86) International application number:
**PCT/CN2023/112067**

(87) International publication number:
**WO 2025/030438 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **LIU, Zhe
Dongguan, Guangdong 523860 (CN)**
• **CAO, Jianfei
Dongguan, Guangdong 523860 (CN)**
• **CHEN, Wenhong
Dongguan, Guangdong 523860 (CN)**

(74) Representative: **RGTH
Patentanwälte PartGmbB
Mönckebergstraße 11
20095 Hamburg (DE)**

(54) **COMMUNICATION METHODS, TERMINAL DEVICES AND NETWORK DEVICES**

(57) The present application relates to communication methods, terminal devices, and network devices. A communication method comprises: according a to a path loss offset value, a terminal device determines a path loss between the terminal device and a first network device; and, on the basis of the path loss, the terminal device sends uplink information to the first network device. The present application can reduce or avoid the power consumption waste of terminal devices.

FIG. 3

**Description**

## TECHNICAL FIELD

The present application relates to the field of communications, and in particular, to a communication method, a terminal device and a network device.

## BACKGROUND

A distributed communication system is beneficial to terminal power saving and improving uplink throughput. In the distributed communication system, multiple transmission reception points (TRPs) are deployed. For uplink transmission, a terminal device transmits uplink information to a TRP, and the TRP then transmits the uplink information to a macro base station via an ideal backhaul communication link between the TRP and the macro base station. For downlink transmission, the macro base station transmits downlink information to the terminal device. Since the TRP does not transmit a downlink reference signal to the terminal device, in the distributed communication system, how the terminal device determines the pathloss when transmitting the uplink information to the TRP is a problem to be solved.

## SUMMARY

Embodiments of the present application provide a communication method, which may be used for a terminal device in a distributed communication system to determine a pathloss and transmit uplink information based on the pathloss, thereby reducing or avoiding waste of power consumption of the terminal device.
The embodiments of the present application provide a communication method, which includes:

determining, by a terminal device, a pathloss between the terminal device and a first network device according to a pathloss offset value; and
transmitting, by the terminal device, uplink information to the first network device based on the pathloss.

The embodiments of the present application provide a communication method, which includes:
transmitting, by a second network device, indication information to a terminal device, where the indication information is used to indicate a pathloss offset value, the pathloss offset value is used to determine a pathloss between the terminal device and a first network device, and the pathloss is used for the terminal device to transmit uplink information to the first network device.
The embodiments of the present application provide a communication method, which includes:

receiving, by a first network device, a first sounding reference signal (SRS); and
transmitting, by the first network device, a received power of the first SRS to a second network device; or transmitting, by the first network device, a difference between a transmit power of the first SRS and a received power of the first SRS to a second network device.

The embodiments of the present application provide a communication method, which includes:

receiving, by a terminal device, downlink control information (DCI) transmitted by a second network device, where a number of bits of a transmission power control (TPC) field in the DCI is greater than or equal to 3; and
adjusting, by the terminal device, a transmit power of uplink information according to the DCI.

The embodiments of the present application provide a communication method, which includes:
transmitting, by a second network device, DCI to a terminal device, where a number of bits of a TPC field in the DCI is greater than or equal to 3; and the DCI is used for the terminal device to determine a transmit power of uplink information.
The embodiments of the present application provide a terminal device, which includes:

a first processing module, configured to determine a pathloss between the terminal device and a first network device according to a pathloss offset value; and
a first transceiver module, configured to transmit uplink information to the first network device based on the pathloss.

The embodiments of the present application provide a second network device, which includes:
a second transceiver module, configured to transmit indication information to a terminal device, where the indication information is used to indicate a pathloss offset value, the pathloss offset value is used to determine a pathloss between the terminal device and a first network device, and the pathloss is used for the terminal device to transmit uplink information to the first network device.

The embodiments of the present application provide a first network device, which includes:

a third transceiver module, configured to receive a first SRS; and transmit a received power of the first SRS to a second network device; or transmit a difference between a transmit power of the first SRS and a received power of the first SRS to a second network device.

The embodiments of the present application provide a terminal device, which includes:

a fourth transceiver module, configured to receive DCI transmitted by a second network device, where a number of bits of a TPC field in the DCI is greater than or equal to 3; and

a third processing module, configured to adjust a transmit power of uplink information according to the DCI.

The embodiments of the present application provide a second network device, which includes:

a fifth transceiver module, configured to transmit DCI to a terminal device, where a number of bits of a TPC field in the DCI is greater than or equal to 3; and the DCI is used for the terminal device to determine a transmit power of uplink information.

The embodiments of the present application further provide a communication device, which includes a processor, a memory, and a transceiver. The memory is configured to store a computer program, and the processor is configured to invoke the computer program stored in the memory and run the computer program, and control the transceiver, to cause the device to perform the above communication methods.

The embodiments of the present application provide a chip, configured to implement the above communication methods.

Specifically, the chip includes: a processor, and the processor is configured to invoke a computer program from a memory and run the computer program, to cause a device equipped with the chip to perform the above communication methods.

The embodiments of the present application provide a computer-readable storage medium, configured to store a computer program, where the computer program, when executed by a device, causes the device to perform the above communication methods.

The embodiments of the present application provide a computer program product, which includes computer program instructions, where the computer program instructions cause a computer to perform the above communication methods.

The embodiments of the present application provide a computer program, where the computer program, when executed on a computer, causes the computer to perform the above communication methods.

In the embodiments of the present application, the terminal device determines the pathloss between the terminal device and the first network device according to the pathloss offset value, and transmits the uplink information to the first network device based on the pathloss. The embodiments of the present application are applicable to the distributed communication system, and are capable of avoiding the situation in which the pathloss determined by the terminal device in the distributed communication system is not applicable to the receiving end of the uplink information, thereby reducing or avoiding the waste of power consumption of the terminal device.

## BRIEF DESCRIPTION OF THE DRAWINGS

FIG. 1 is a schematic diagram of an application scenario according to the embodiments of the present application.
FIG. 2 is a schematic structural diagram of a distributed communication system.
FIG. 3 is a schematic flowchart of a communication method 300 according to an embodiment of the present application.
FIG. 4A is a schematic diagram illustrating a pathloss offset value set associated with one or more uplink TRPs in the embodiments of the present application.
FIG. 4B is a schematic diagram of one-to-one correspondence between multiple pathloss offset value sets and multiple uplink TRPs in the embodiments of the present application.
FIG. 5A is an implementation flowchart I of Embodiment IV of the present application.
FIG. 5B is an implementation flowchart II of Embodiment IV of the present application.
FIG. 6 is a schematic diagram of an interaction manner between a terminal device and a network device according to an embodiment of the present application.
FIG. 7 is a schematic flowchart of a communication method 700 according to an embodiment of the present application.
FIG. 8 is a schematic flowchart of a communication method 800 according to an embodiment of the present application.

FIG. 9 is an implementation flowchart of a communication method 900 according to an embodiment of the present application.

FIG. 10 is a schematic block diagram of a terminal device 1000 according to an embodiment of the present application.

FIG. 11 is a schematic block diagram of a second network device 1100 according to an embodiment of the present application.

FIG. 12 is a schematic block diagram of a second network device 1200 according to an embodiment of the present application.

FIG. 13 is a schematic block diagram of a first network device 1300 according to an embodiment of the present application.

FIG. 14 is a schematic block diagram of a terminal device 1400 according to an embodiment of the present application.

FIG. 15 is a schematic block diagram of a second network device 1500 according to an embodiment of the present application.

FIG. 16 is a schematic structural diagram of a communication device 1600 according to the embodiments of the present application.

FIG. 17 is a schematic structural diagram of a chip 1700 according to the embodiments of the present application.

## DETAILED DESCRIPTION

Technical solutions in the embodiments of the present application are described below in conjunction with drawings in the embodiments of the present application.

The technical solutions of the embodiments of the present application may be applied to various communication systems, such as: a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication network (Non-Terrestrial Networks, NTN) system, a universal mobile telecommunication system (UMTS), a wireless local area networks (WLAN), wireless fidelity (WiFi), a fifth generation (5th-Generation, 5G) communication system or other communication systems.

Generally speaking, traditional communication systems support a limited number of connections, which is also easy to implement. However, with the development of the communication technology, mobile communication systems will not only support traditional communications, but also support communications such as device-to-device (D2D) communication, machine-to-machine (M2M) communication, machine-type communication (MTC), vehicle-to-vehicle (V2V) communication, or vehicle-to-everything (V2X) communication. The embodiments of the present application may also be applied to these communication systems.

In an implementation, the communication system in the embodiments of the present application may be applied to a carrier aggregation (CA) scenario, may also be applied to a dual connectivity (DC) scenario, and may also be applied to a standalone (SA) network deployment scenario.

In an implementation, the communication system in the embodiments of the present application may be applied to an unlicensed spectrum, where the unlicensed spectrum may also be considered as a shared spectrum. Alternatively, the communication system in the embodiments of the present application may also be applied to a licensed spectrum, where the licensed spectrum may be considered as an unshared spectrum.

In the embodiments of the present application, each embodiment is described in conjunction with a network device and a terminal device, where the terminal device may also be referred to as user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STAION, ST) in a WLAN, or may be a cellular phone, a cordless phone, a session initiation protocol (SIP) phone, a wireless local loop (WLL) station, a personal digital assistant (PDA) device, a handheld device with wireless communication functions, a computing device or other processing devices connected to a wireless modem, an in-vehicle device, a wearable device, a terminal device in a next generation communication system (e.g., an NR network), a terminal device in a future evolved public land mobile network (PLMN) network, or the like.

In the embodiments of the present application, the terminal device may be deployed on land, including indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present application, the terminal device may be a mobile phone, a pad, a computer with wireless transceiver functions, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, or the like.

As an example but not a limitation, in the embodiments of the present application, the terminal device may also be a wearable device. The wearable device may also be referred to as a wearable smart device, which is a generic term for a wearable device by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also achieves powerful functions through software supporting as well as data interaction or cloud interaction. Generalized wearable smart devices includes full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the present application, the network device may be a device used for communicating with a mobile device, and the network device may be an access point (AP) in the WLAN, an evolutional base station (Evolutional Node B, eNB or eNodeB) in the LTE, or a relay station or an access point, or an in-vehicle device, a wearable device, and a network device (gNB) in the NR network, or a network device in the future evolved PLMN network, or a network device in the NTN network, or the like.

As an example but not a limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite, or the like. Optionally, the network device may also be a base station deployed on land, water, or other places.

In the embodiments of the present application, the network device may provide services for a cell, and the terminal device communicates with the network device through a transmission resource (e.g., a frequency-domain resource; or in other words, a spectrum resource) used by the cell. The cell may be a cell corresponding to the network device (e.g., a base station), and the cell may belong to a macro base station, or may belong to a base station corresponding to a small cell. The small cell here may include: a metro cell, a micro cell, a pico cell, or a femto cell, or the like. These small cells have characteristics of small coverage ranges and low transmit power, which are applicable for providing a data transmission service with a high speed.

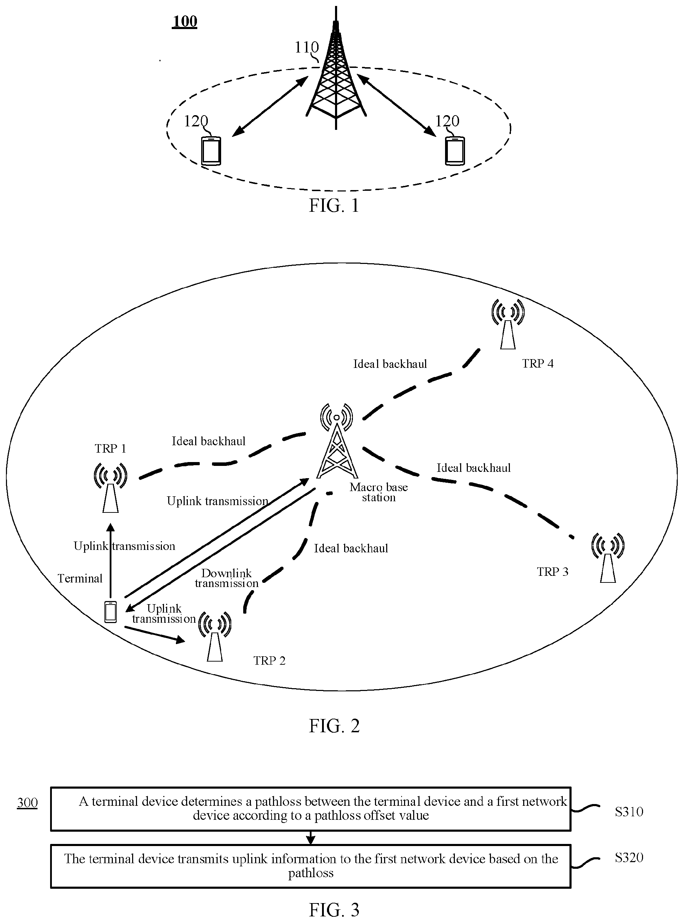

FIG. 1 exemplarily illustrates a communication system 100. The communication system includes a network device 110 and two terminal devices 120. In an implementation, the communication system 100 may include multiple network devices 110, and the coverage range of each network device 110 may include another number of terminal devices 120, which is not limited in the embodiments of the present application.

In an implementation, the communication system 100 may also include other network entities such as a mobility management entity (MME), and an access and mobility management function (AMF), which is not limited in the embodiments of the present application.

The network device may include an access network device and a core network device. That is, the wireless communication system also includes multiple core networks for communicating with the access network device. The access network device may be an evolutional node B (the abbreviation may be eNB or e-NodeB), a macro base station, a micro base station (also referred to as a "small base station"), a pico base station, an access point (AP), a transmission point (TP) or a new generation Node B ( gNodeB) in a long-term evolution (LTE) system, a next generation (mobile communication system) (e.g., next radio, NR) system or an authorized auxiliary access long-term evolution (LAA-LTE) system, or the like.

It should be understood that in the embodiments of the present application, a device with communication functions in the network/system may be referred to as a communication device. Taking the communication system illustrated in FIG. 1 as an example, the communication device may include a network device with communication functions and a terminal device with communication functions. The network device and the terminal device may be the specific devices in the embodiments of the present application, which will not be repeated here. The communication device may also include other devices in the communication system, such as a network controller, a mobility management entity, or other network entities, which are not limited in the embodiments of the present application.

It should be understood that the terms "system" and "network" are often used interchangeably herein. The term herein "and/or" is only an association relationship to describe associated objects, meaning that there may be three kinds of relationships, for example, A and/or B may mean three cases where: A exists alone, both A and B exist, and B exists alone. In addition, a character "/" herein generally means that related objects before and after "/" are in an "or" relationship.

It should be understood that, "indicate/indicated/indicating/indication" mentioned in the embodiments of the present application may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description of the embodiments of the present application, the term "correspond/corresponding/correspondence" may mean that there is a direct correspondence or an indirect correspondence between the two, or may mean that there is an association relationship between the two, or may mean a relationship of indicating and being indicated, or a relationship of configuring and being configured, or the like.

To facilitate understanding of the technical solutions of the embodiments of the present application, the related technologies of the embodiments of the present application are described below. The following related technologies, as optional solutions, may be arbitrarily combined with the technical solutions of the embodiments of the present application, and they all fall within the protection scope of the embodiments of the present application.

In a communication network, although a base station has sufficient transmit power to transmit signals to a terminal device, the transmit power and battery capacity of the terminal device may be relatively limited. On the other hand, further improvement of uplink throughput is a problem to be solved. In order to solve the above problems, a distributed communication system is proposed. The distributed communication system may also be referred to as a distributed system, a distributed deployed communication system, a distributed deployed system, or the like. Multiple TRPs are provided in the distributed communication system, and the multiple TRPs provide services to the terminal device, respectively, which may improve the coverage of cell edge and provide more balanced service quality. A large number of TRPs communicating with the terminal device can ensure the robustness of communication links. FIG. 2 is a schematic structural diagram of a distributed communication system. As illustrated in FIG. 2, multiple TRPs are provided in the distributed communication system. During uplink transmission, the terminal device transmits uplink information to the TRP, and the TRP then transmits the uplink information to a macro base station via an ideal backhaul communication link between the TRP and the macro base station. During downlink transmission, the macro base station may directly transmit downlink information to the terminal device.

In the present technology, the terminal device determines a pathloss value by measuring a downlink reference signal, and applies the pathloss to the calculation of the transmit power of the uplink transmission. In the distributed communication system, the terminal device may not receive the downlink reference signal from the TRP. For example, the terminal device only receives the downlink reference signal configured from the macro base station, determines the pathloss based on the downlink reference signal, and determines the transmit power when transmitting the uplink information to the TRP based on the pathloss. That is, in the related art, the terminal device determines the pathloss between the terminal device and the macro base station, and then determines the transmit power when the terminal device transmits the uplink information to the TRP based on the pathloss. However, in the distributed communication system, the pathloss between the terminal device and the macro base station and the pathloss between the terminal device and the TRP may differ significantly, and the former often is greater than the latter. Therefore, the pathloss calculated by using the downlink reference signal transmitted by the macro base station is not applicable to the current environment, resulting in the waste of power consumption of the terminal device. For uplink information such as physical uplink shared channel (PUSCH) information, physical uplink control channel (PUCCH) information, a sounding reference signal (SRS) information and physical random access channel (PRACH) information, there is a problem that the pathloss determined by the terminal device is not suitable for transmitting such uplink information.

FIG. 3 is a schematic flowchart of a communication method 300 according to an embodiment of the present application. Optionally, the method may be applied to the system illustrated in FIG. 1 or FIG. 2, but is not limited thereto. The method includes at least part of the following.

In S310, a terminal device determines a pathloss between the terminal device and a first network device according to a pathloss offset value.

In S320, the terminal device transmits uplink information to the first network device based on the pathloss.

The first network device may include a TRP in a distributed communication system. In a distributed communication network, the terminal device may determine a pathloss between the terminal device and each TRP by using the above manner, respectively; and transmit the uplink information to the uplink TRP based on the pathloss.

In some implementations, the terminal device receives indication information transmitted by a second network device, where the indication information is used to indicate the pathloss offset value. The second network device may be a device different from the first network device, for example, the second network device may include a macro base station/base station, or other TRPs different from the first network device.

The uplink information may include at least one of: PUSCH information, PUCCH information, SRS information and PRACH information.

Since the terminal device determines the pathloss between the terminal device and the first network device according to the pathloss offset value, instead of determining a pathloss between the terminal device and other network devices, the terminal device determines a transmit power based on the pathloss and transmits the uplink information to the first network device by using the transmit power. In this way, it is capable of avoiding the problem that the pathloss determined by the terminal device is not applicable to transmitting the uplink information, thereby reducing or avoiding the waste of power consumption of the terminal device.

In other implementations, the second network device may determine the pathloss between the terminal device and the first network device, and transmit the pathloss to the terminal device; and the terminal device transmits the uplink information to the first network device based on the pathloss.

In some implementations, the terminal device may determine the pathloss between the terminal device and the first network device according to pathloss information configured or indicated by the second network device and a pathloss between the terminal device and the second network device. For example, the second network device configures or indicates the pathloss information for each first network device, respectively, and the terminal device determines a pathloss between the terminal device and each first network device respectively according to the configuration or indication of the first network device.

In some implementations, the pathloss information includes a pathloss offset value. The pathloss information may also include a pathloss reference signal index and/or a reference signal power; where

a pathloss reference signal indicated by the pathloss reference signal index is transmitted by the second network device to the terminal device. The pathloss reference signal may be a channel state information reference signal (CSI-RS), a synchronization signal block (SSB), or a positioning reference signal (PRS);

the pathloss reference signal index may be configured by a network device via radio resource control (RRC) signaling, or updated via a media access control (MAC) control element (CE), or determined by a preset rule, or dynamically mapped via an SRS resource indicator (SRI) field in downlink control information (DCI). It is to be noted that the network device is a device different from one or more uplink TRPs; and

the reference signal power may be determined according to a reference signal power configured by a network device. The reference signal power is a transmit power of the pathloss reference signal, such as, may be a transmit power of the CSI-RS, a transmit power of the SSB, or a transmit power of the PRS. It is to be noted that the network device is a device different from one or more uplink TRPs.

The terminal device may determine pathloss(es) between the terminal device and one or more first network devices according to the pathloss information.

The pathloss offset value is configured by the second network device. One possible implementation scheme is that the second network device receives an SRS from the terminal device, and determines the pathloss between the terminal device and the second network device according to a transmit power and a Reference Signal Received Power (RSRP) of the SRS; the second network device receives the pathloss (or a power used for determining the pathloss) between the terminal device and the first network device from the first network device; and the second network device determines the pathloss offset value according to the pathloss between the terminal device and the second network device and the pathloss between the terminal device and the first network device. The second network device may also configure the pathloss offset value in other manners, and the embodiments of the present application do not limit the specific manners. In addition, in the embodiments of the present application, the second network device may configure different pathloss offset values for each terminal device, or may configure the same pathloss offset value for multiple terminal devices that are located closely together, so as to reduce the workload of configuring and calculating the pathloss offset value.

The pathloss offset value may be a difference between the pathloss between the terminal device and the second network device and the pathloss between the terminal device and the first network device. The pathloss offset value may be a positive integer, a negative integer or 0. When the pathloss offset value is default, it indicates that the pathloss offset value is a default value, for example, the default value may be 0.

For example, the pathloss offset value = the pathloss between the terminal device and the second network device -the pathloss between the terminal device and the first network device.

Accordingly, when the terminal device transmits the uplink information to the first network device, the pathloss between the terminal device and the first network device may be determined according to a reference signal power when the second network device transmits the pathloss reference signal, a received power of the terminal receiving the pathloss reference signal and the pathloss offset value, so as to determine a transmit power used by the terminal device when transmitting the uplink information to the first network device.

For example, the pathloss between the terminal device and the first network device = the pathloss between the terminal device and the second network device -the pathloss offset value. For example, the pathloss between the terminal device and the second network device may be determined by a power of the reference signal transmitted by the second network device to the terminal device and a higher layer filtered RSRP of the reference signal.

Alternatively, the pathloss offset value = the pathloss between the terminal device and the first network device -the pathloss between the terminal device and the second network device.

Accordingly, when the terminal device transmits the uplink information to the first network device, the pathloss between the terminal device and the first network device may be determined according to the reference signal power when the second network device transmits the pathloss reference signal, the received power of the terminal receiving the pathloss reference signal and the pathloss offset value, so as to determine the transmit power used by the terminal device when transmitting the uplink information to the first network device.

For example, the pathloss between the terminal device and the first network device = the pathloss between the terminal device and the second network device + the pathloss offset value. For example, the pathloss between the terminal device and the second network device may be determined by the power of the reference signal transmitted by the second network device to the terminal device and the higher layer filtered RSRP of the reference signal.

In the above two examples, the higher layer filtered RSRP is equivalent to the received power of the terminal device receiving the pathloss reference signal. The higher layer filtered RSRP may be represented by an RSRP after higher layer filtering when the terminal device receives the pathloss reference signal. The higher layer filtered RSRP may be referred to as a Higher Layer Filtered RSRP. The higher layer filtered RSRP is obtained by the terminal device through measuring the pathloss reference signal.

It can be seen from the higher layer filtered RSRP and the reference signal power that these two items are determined according to the pathloss reference signal transmitted by the second network device. The pathloss calculated by these two items is the pathloss between the terminal device and the second network device, which is different from the pathloss(es) between the terminal device and one or more TRPs. Therefore, the network device configures a pathloss offset value for the terminal device to adjust the pathloss difference, so that the terminal device may determine the pathloss(es) between the terminal device and the one or more uplink TRPs.

In some implementations, the uplink information transmitted by the terminal device may include at least one of: PUSCH information, PUCCH information, SRS information or PRACH information. Accordingly,

the pathloss information may include pathloss information of the PUSCH, and the terminal device transmits the PUSCH information to one or more first network devices (e.g., uplink TRPs) according to the pathloss information; the pathloss information may include pathloss information of the PUCCH, and the terminal device transmits the PUCCH information to one or more first network devices (e.g., uplink TRPs) according to the pathloss information; the pathloss information may include pathloss information of the SRS, and the terminal device transmits the SRS information to one or more first network devices (e.g., uplink TRPs) according to the pathloss information; or the pathloss information may include pathloss information of the PRACH, and the terminal device transmits the PRACH information to one or more first network devices (e.g., uplink TRPs) according to the pathloss information.

In some embodiments, the pathloss offset value is associated with one or more of the following transmission parameters:

a type of uplink information;
a pathloss reference signal index;
an SRS resource indicator (SRI) index; or
spatial information.

The type of uplink information may indicate that the uplink information is at least one of PUSCH information, PUCCH information, SRS information or PRACH information.

The pathloss reference signal index may include one or more of: a CSI-RS index, a CSI-RS resource index, an SSB index, an SSB resource index, a PRS index, or a PRS resource index.

The spatial information may include at least one of:

SRS resource set information;
transmission configuration indicator (TCI) state information;
antenna panel information;
control resource set (CORESET) group information (CORESET Pool Index);
beam information; or
reference signal resource information.

As can be seen from the above, the second network device configures multiple pathloss offset values for the terminal device, and configures transmission parameters or transmission parameter combinations associated with each pathloss offset value. In some implementations, the first network device is associated with one or more of the above transmission parameters, or the uplink information transmitted by the terminal device to the first network device is associated with one or more of the above transmission parameters. When the terminal device transmits the uplink information, the terminal device may determine the pathloss offset value associated with the first network device or the uplink information according to the one or more transmission parameters associated with the first network device or the uplink information and the configuration of the second network device; and determines the pathloss between the terminal device and the first network device according to the pathloss offset value associated with the first network device or the uplink information.

For example, taking that the pathloss offset value is associated with the type of uplink information as an example, the second network device pre-configures pathloss offset value 1 and pathloss offset value 2 for the terminal device, where the pathloss offset value 1 is associated with the PUSCH information, and the pathloss offset value 2 is associated with the PUCCH information. When the terminal device transmits the uplink information, if the information to be transmitted is the PUSCH information, it may be determined that a pathloss offset value associated with the uplink information is the pathloss offset value 1 according to the association relationship between the pathloss offset value 1 and the PUSCH information; and if the information to be transmitted is the PUCCH information, it may be determined that a pathloss offset value associated with the uplink information is the pathloss offset value 2 according to the association relationship between the pathloss offset value 2 and the PUCCH information.

For example, taking that the pathloss offset value is associated with the TCI state as an example, the second network device pre-configures pathloss offset value 5, pathloss offset value 6 and pathloss offset value 7 for the terminal device, where the pathloss offset value 5 is associated with TCI state 1, the pathloss offset value 6 is associated with TCI state 2, and the pathloss offset value 7 is associated with TCI state 3. When the terminal device transmits the uplink information to the first network device, if the first network device is associated with the TCI state 1, it may be determined that a pathloss offset value associated with the first network device is the pathloss offset value 5 according to the association relationship between the pathloss offset value 5 and the TCI state 1.

In the above examples, the case where the pathloss offset value is associated with a transmission parameter is described by way of example. In the case where the pathloss offset value is associated with multiple transmission parameters, the terminal device may also determine the pathloss offset value associated with the first network device, or determine the pathloss offset value associated with the uplink information by using the same manner, which will not be repeated here.

In the embodiments of the present application, the spatial information may refer to a spatial setting, or a spatial relation, a spatial parameter or the like used for uplink information transmission. The spatial information may represent a spatial relationship in which the terminal device transmits the uplink and downlink channels. For example, the spatial relationship may include a panel, a beam or a TRP in which the terminal device transmits the uplink and downlink channels.

The SRS resource set information includes an SRS resource set index, an SRS resource set ID or the like. The SRS resource set may be associated with panel/beam/TCI state. In actual applications, the terminal device may transmit the uplink channel using the same panel/beam/TCI as that used for transmitting the SRS resource set.

The TCI state information may be used for uplink and downlink beam management. A TCI state may include a Quasi Co-Location (QCL) type configuration and a QCL reference signal configuration. The QCL type configuration may be one of QCL typeA, QCL typeB, QCL typeC or QCL typeD, and the QCL reference signal configuration may be a cell identifier (ID), a bandwidth part (BWP) ID and a reference signal identifier (such as, a CSI-RS resource ID or an SSB index). The definitions of different QCL types are as follows: QCL TypeA is used to configure Doppler shift, Doppler spread, average delay, and delay spread; QCL typeB is used to configure Doppler shift and Doppler spread; QCL typeC is used to configure Doppler shift and average delay; and QCL typeD is used to configure spatial Rx parameters.

If the network device configures the QCL reference signal as SSB 1 resource and the QCL type as typeA, typeB or typeC for the target uplink channel through the TCI state, the terminal device may assume that large-scale parameters of the above target uplink signal and SSB 1 resource are the same or similar, and the large-scale parameters are determined by the QCL type configuration.

If the transmission TRPs, transmission panels or transmit beams of two uplink channels are different, different TCI states are usually configured.

In the embodiments of the present application, the panel information may include a panel ID, or an index value of a panel, or the like, which is not limited in the embodiments of the present application.

In the embodiments of the present application, the CORESET Pool Index may be associated with the TRP. The network device may configure a CORESET Pool Index for each CORESET to indicate whether it belongs to the same TRP. The value range of the CORESET Pool Index is 0 and 1. For CORESETs configured with the same CORESET Pool Index, the terminal device may consider that they are the associated with the same TRP.

In addition, the beam information may include a beam ID, or an index value of a beam, or the like, which is not limited in this embodiments of the present application.

The TRP information may include a TRP ID, or an index value of a TPR, or the like, which is not limited in the present embodiment of the present application.

The reference signal resource information includes a CSI-RS resource index, an SSB resource index, a PRS resource index, and an SRS resource index, or the like.

In the embodiments of the present application, the terminal device may be configured with multiple different spatial parameters, that is, the terminal device may transmit uplink channels through multiple different spatial relationships.

The following are several specific embodiments to introduce several manners in which the second network device configures the pathloss offset value for the terminal device.

Embodiment I

In the present embodiment, the pathloss offset value is configured via the RRC signaling, that is, the indication information transmitted by the second network device to the terminal device includes the RRC signaling. For example, the second network device configures the pathloss offset value for the terminal device via the RRC signaling. The RRC signaling may be first RRC signaling.

In some implementations, the pathloss offset value is associated with one or more of: a type of uplink information, a pathloss reference signal index, an SRS resource indicator (SRI) index, SRS resource set information, TCI state information, antenna panel information, CORESET group information, beam information, or reference signal resource information. The pathloss reference signal index may include: a CSI-RS index, a CSI-RS resource index, an SSB index, an SSB resource index, a PRS index, a PRS resource index, or the like.

In some implementations, the pathloss reference signal index is configured via independent RRC signaling. For example, the second network device may configure the pathloss offset value, the pathloss reference signal index and the reference signal power for the terminal device via different pieces of RRC signaling, respectively. Alternatively, the second network device may also configure the pathloss offset value, the pathloss reference signal index and the reference signal power for the terminal device via the same RRC signaling. Alternatively, the second network device may also configure the pathloss offset value, the pathloss reference signal index and the reference signal power for the terminal device via two pieces of RRC signaling, and each piece of RRC signaling is used to configure one or two of the pathloss offset value, the pathloss reference signal index and the reference signal power. The embodiments of the present application do not limit the specific configuration manner.

The following is an example of an RRC structure, and the RRC structure is used to configure the pathloss offset value to be associated with the pathloss reference signal index:

```
PUSCH-PathlossReferenceRS ::=        SEQUENCE {
    pusch-PathlossReferenceRS-Id         PUSCH-PathlossReferenceRS-Id,
    pathloss-delta-Id                    PUSCH-pathloss-delta-Id
    referenceSignal                      CHOICE {
        ssb-Index                            SSB-Index,
        csi-RS-Index                         NZP-CSI-RS-ResourceId
    }
}
```

In the above RRC structure, pathloss-delta-Id represents a pathloss offset value ID, and PUSCH-pathloss-delta-Id represents a pathloss reference signal ID.

Since the terminal device obtains different measurement values according to different pathloss reference signals, associating the path loss offset value with the path loss reference signal enables more accurate configuration of the pathloss reference signal.

The following is an example of an RRC structure, and the RRC structure is used to configure the pathloss offset value to be associated with the TCI state. The pathloss offset values corresponding to different uplink channels may be the same or configured separately. In the present example, taking a case where pathloss offset values for different uplink channels (e.g., a PUSCH, a PUCCH, an SRS and a PRACH) are configured separately as an example:

```
TCI-State ::=                        SEQUENCE {
    tci-StateId                          TCI-StateId,
    pathloss-delta-Id                    PUSCH-pathloss-delta-Id
    pathloss-delta-Id                    PUCCH-pathloss-delta-Id
    pathloss-delta-Id                    SRS-pathloss-delta-Id
    pathloss-delta-Id                    PRACH-pathloss-delta-Id

    ul-powerControl-r17                  Uplink-powerControlId-r17
    ]]
}
```

In the above RRC structure, TCI-StateId represents a TCI state ID, and PUSCH-pathloss-delta-Id, PUCCH-pathloss-delta-Id, SRS-pathloss-delta-Id and PRACH-pathloss-delta-Id represent pathloss offset value IDs corresponding to different uplink channels (e.g., PUSCH, PUCCH, SRS and PRACH), respectively.

Since different TCI states may represent different beam directions, the pathloss offset values for different beam directions are different. Therefore, configuring the pathloss offset value to be associated with the TCI state may more accurately configure the pathloss offset value and better integrate with the existing TCI architecture.

The following is an example of an RRC structure, and the RRC structure is used to configure the pathloss offset value to be associated with the CSI-RS index (or the CSI-RS resource index). The pathloss offset values corresponding to different uplink channels may be the same or configured separately. In the present example, taking a case where pathloss offset values for different uplink channels (e.g., PUSCH, PUCCH, SRS and PRACH) are configured separately as an example:

```
NZP-CSI-RS-Resource ::=          SEQUENCE {
    nzp-CSI-RS-ResourceId                NZP-CSI-RS-ResourceId,
    powerControlOffset                   INTEGER (-8..15),
    powerControlOffsetSS      ENUMERATED{db-3,  db0,  db3,  db6}   OPTIONAL, --
Need R
    pathloss-delta-Id                    PUSCH-pathloss-delta-Id
    pathloss-delta-Id                    PUCCH-pathloss-delta-Id
    pathloss-delta-Id                    SRS-pathloss-delta-Id
    pathloss-delta-Id                    PRACH-pathloss-delta-Id

    ...
}
```

In the above RRC structure, powerControlOffsetSS represents an offset relative to the SSB power. nzp-CSI-RS-ResourceId indicates a CSI-RS resource index, and PUSCH-pathloss-delta-Id, PUCCH-pathloss-delta-Id, SRS-pathloss-delta-Id and PRACH-pathloss-delta-Id represent pathloss offset value IDs corresponding to different uplink channels (e.g., PUSCH, PUCCH, SRS, and PRACH), respectively.

When the reference signal power is the power of the CSI-RS, the pathloss offset value is associated with the CSI-RS index (or the CSI-RS resource index), which may more accurately compensate for the difference between the pathlosses.

The following is an example of an RRC structure, and the RRC structure is used to configure the pathloss offset value to be associated with the SSB index (or the SSB resource index). The pathloss offset values corresponding to different uplink channels may be the same or configured separately. In the present example, taking a case where pathloss offset values for different uplink channels (e.g., PUSCH, PUCCH, SRS and PRACH) are configured separately as an example:

```
SSB-Index ::=                        INTEGER (0..maxNrofSSBs-1)
    pathloss-delta-Id                    PUSCH-pathloss-delta-Id
    pathloss-delta-Id                    PUCCH-pathloss-delta-Id
    pathloss-delta-Id                    SRS-pathloss-delta-Id
    pathloss-delta-Id                    PRACH-pathloss-delta-Id
```

In the above RRC structure, SSB-Index represents an SSB index, PUSCH-pathloss-delta-Id, PUCCH-pathloss-delta-Id, SRS-pathloss-delta-Id and PRACH-pathloss-delta-Id represent pathloss offset value IDs corresponding to different uplink channels (PUSCH, PUCCH, SRS and PRACH), respectively.

When the reference signal power is the power of the SSB, associating the pathloss offset value with the SSB index (or the SSB resource index) enables more accurate compensation for the difference between the pathlosses.

The following is an example of an RRC structure, and the RRC structure is used to configure the pathloss offset value to be associated with the SRS resource set index. The pathloss offset values corresponding to different uplink channels may be the same or configured separately. In the present example, taking a case where pathloss offset values for different uplink channels (e.g., SRS and PUSCH) are configured separately as an example:

SRS-ResourceSet ::=          SEQUENCE {
    srs-ResourceSetId            SRS-ResourceSetId,
    pathloss-delta-Id            PUSCH-pathloss-delta-Id

In the above RRC structure, SRS-ResourceSetId represents an SRS resource set index, SRS-ResourceSetId and PUSCH-pathloss-delta-Id represent pathloss offset value IDs corresponding to different uplink channels (e.g., SRS and PUSCH), respectively. This solution is mainly applicable to a scenario where the uplink information is the PUSCH and the SRS. In PUSCH transmission, each PUSCH is associated with an SRS resource set; and therefore, associating the pathloss offset value with the SRS resource set index enables more accurate compensation for the pathloss of the PUSCH.

Various manners for configuring the pathloss offset value are described above, but the manners for configuring the pathloss offset value in the embodiments of the present application are not limited to thereto, and will not be listed here. By using the pathloss offset value configured by the second network device, the terminal device may determine the pathloss(es) between the terminal device and one or more first network devices, and transmit the uplink information to the first network device based on the pathloss. If the second network device does not configure the pathloss offset value for the terminal device, the value of the pathloss offset value is 0 by default when the terminal device determines the pathloss between the terminal device and the first network device.

Embodiment II

In the present embodiment, the pathloss offset value is indicated by the MAC CE, that is, the indication information transmitted by the second network device to the terminal device includes the MAC CE. For example, the second network device configures the pathloss offset value for the terminal device via the MAC CE. Since a delay of the MAC CE is smaller than that of the RRC signaling, in the present embodiment, the MAC CE is adopted to configure the pathloss offset value, which has a smaller delay, so that the terminal device may quickly receive the pathloss offset and calculate the pathloss(es) between the terminal device and one or more first network devices (e.g., uplink TRPs).

The following is a possible MAC CE structure, which is denoted as MAC CE structure 1. MAC CE structure 1 includes one or more of:

    (1) a serving cell index (serving cell ID);
    (2) a bandwidth part index (BWP ID);
    (3) a pathloss offset value (pathloss offset); or
    (4) a reserved bit (the reserved bit is an optional item).

In MAC CE structure 1, an associated pathloss offset value is configured for a specific serving cell and/or BWP. In the above example, the pathloss offset values corresponding to different uplink channels are the same. In other examples, the pathloss offset values corresponding to different uplink channels may be configured separately. For example, MAC CE structure 1 is modified to include multiple pathloss offset values, and each pathloss offset value corresponds to a different uplink channel (e.g., PUSCH channel, PUCCH channel, SRS channel, or PRACH channel). When transmitting the uplink information, the terminal device determines the pathloss by adopting the pathloss offset value corresponding to the uplink channel, and transmits the uplink information based on the pathloss.

The following is a possible MAC CE structure, which is denoted as MAC CE structure 2. MAC CE structure 2 includes one or more of:

    (1) a serving cell index (serving cell ID);
    (2) a bandwidth part index (BWP ID);
    (3) a pathloss offset;
    (4) a pathloss reference signal index; or
    (5) a reserved bit (the reserved bit is an optional item).

In MAC CE structure 2, an associated pathloss offset value is configured for one or more of a specific serving cell, a BWP or a pathloss reference signal. In the above example, the pathloss offset values corresponding to different uplink channels are the same. In other examples, the pathloss offset values corresponding to different uplink channels may be configured separately. For example, MAC CE structure 2 is modified to include multiple pathloss offset values, and each pathloss offset value corresponds to a different uplink channel (e.g., PUSCH channel, PUCCH channel, SRS channel or PRACH channel). When transmitting the uplink information, the terminal device determines the pathloss by adopting the pathloss offset value corresponding to the uplink channel, and transmits the uplink information based on the pathloss.

The following is a possible MAC CE structure, which is denoted as MAC CE structure 3. MAC CE structure 3 includes one or more of:

(1) a serving cell index (serving cell ID);
(2) a bandwidth part index (BWP ID) ;
(3) a pathloss offset;
(4) a pathloss reference signal index;
(5) a sounding reference signal resource indicator (SRI) index; or
(6) a reserved bit (the reserved bit is an optional item).

In MAC CE structure 3, an associated pathloss offset value is configured for one or more of a specific serving cell, a BWP, a pathloss reference signal or an SRI. In the above example, the pathloss offset values corresponding to different uplink channels are the same. In other examples, the pathloss offset values corresponding to different uplink channels may be configured separately. For example, MAC CE structure 3 is modified to include multiple pathloss offset values, and each pathloss offset value corresponds to a different uplink channel (e.g., PUSCH channel, PUCCH channel, SRS channel or PRACH channel). When transmitting the uplink information, the terminal device determines the pathloss by adopting the pathloss offset value corresponding to the uplink channel, and transmits the uplink information based on the pathloss.

The following is a possible MAC CE structure, which is denoted as MAC CE structure 4. MAC CE structure 4 includes one or more of:

(1) a serving cell index (serving cell ID);
(2) a bandwidth part index (BWP ID);
(3) a pathloss offset;
(4) a pathloss reference signal index;
(5) a sounding reference signal resource set index; or
(6) a reserved bit (the reserved bit is an optional item).

In MAC CE structure 4, an associated pathloss offset value is configured for one or more of a specific serving cell, a BWP, a pathloss reference signal or a sounding reference signal resource set. In the above example, the pathloss offset values corresponding to different uplink channels are the same. In other examples, the pathloss offset values corresponding to different uplink channels may be configured separately. For example, MAC CE structure 3 is modified to include multiple pathloss offset values, and each pathloss offset value corresponds to a different uplink channel (e.g., PUSCH channel, PUCCH channel, SRS channel or PRACH channel). When transmitting the uplink information, the terminal device determines the pathloss by adopting the pathloss offset value corresponding to the uplink channel, and transmits the uplink information based on the pathloss.

Embodiment III

In the present embodiment, the pathloss offset value is configured via the RRC signaling and indicated via the DCI, that is, the indication information transmitted by the second network device to the terminal device includes the RRC signaling and the DCI. For example, the second network device configures one or more pathloss offset value sets for the terminal device via the RRC signaling, and dynamically maps the pathloss offset values corresponding to different pieces of spatial information via fields in the DCI. In this way, the pathloss offset value may be adjusted more flexibly and dynamically, and the difference of the pathloss may be compensated more accurately.

The present embodiment includes at least the following two manners.

Manner 1: a pathloss offset value set is configured via the RRC signaling, and pathloss offset values associated with different spatial information in the pathloss offset value set are indicated via the DCI. Since different first network devices (e.g., uplink TRPs) may correspond to different pieces of spatial information, the pathloss offset values associated with different pieces of spatial information being indicated via the DCI is equivalent to the pathloss offset values associated with different first network devices (e.g., uplink TRPs) being indicated.

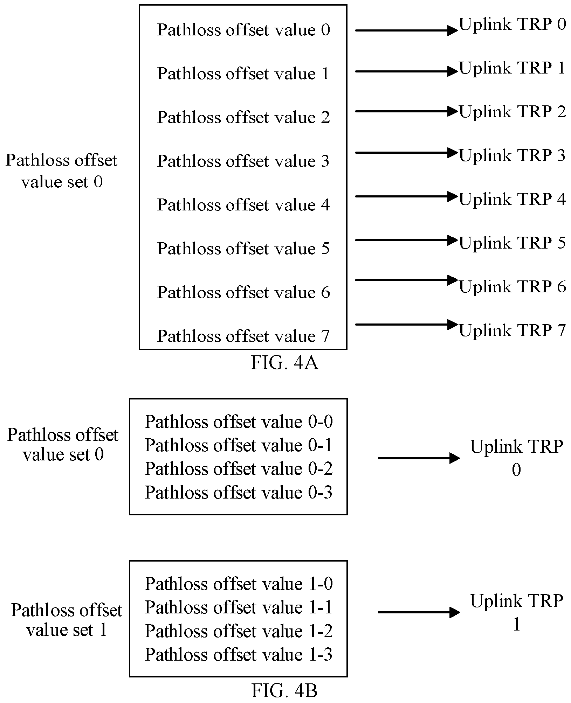

FIG. 4A is a schematic diagram illustrating a pathloss offset value set associated with one or more uplink TRPs in the embodiments of the present application. As illustrated in FIG. 4A, pathloss offset value set 0 is configured for the terminal device via the RRC signaling, and the pathloss offset value set 0 includes 8 pathloss offset values; and the pathloss offset value(s) associated with one or more uplink TRPs in pathloss offset value set 0 is(are) indicated via the DCI. In the example of FIG. 4A, pathloss offset value 0 is associated with uplink TRP 0, pathloss offset value 1 is associated with uplink TRP 1, pathloss offset value 2 is associated with uplink TRP 2, pathloss offset value 3 is associated with uplink TRP 3, pathloss offset value 4 is associated with uplink TRP 4, pathloss offset value 5 is associated with uplink TRP 5, pathloss offset value 6 is associated with uplink TRP 6, and pathloss offset value 7 is associated with uplink TRP 7.

Manner 2: multiple pathloss offset value sets are configured via the RRC signaling, and the multiple pathloss offset value sets correspond to multiple first network devices (e.g., uplink TRPs) one-to-one. The pathloss offset values associated with different pieces of spatial information in the pathloss offset value sets are indicated via the DCI. Since different first network devices (e.g., uplink TRPs) may correspond to different pieces of spatial information, the pathloss offset values associated with different pieces of spatial information being indicated via the DCI is equivalent to the pathloss offset values associated with different first network devices (e.g., uplink TRPs) being indicated.

FIG. 4B is a schematic diagram of one-to-one correspondence between multiple pathloss offset value sets and multiple uplink TRPs in the embodiments of the present application. As illustrated in FIG. 4B, pathloss offset value set 0 and pathloss offset value set 1 are configured for the terminal device via the RRC signaling; where pathloss offset value set 0 is associated with uplink TRP 0, and pathloss offset value set 1 is associated with uplink TRP 1. The pathloss offset values in different pathloss offset value sets are the same, partially the same, or completely different. Then, the pathloss offset values associated with uplink TRP 0 in pathloss offset value set 0 may be indicated via the DCI, and the pathloss offset values associated with uplink TRP 1 in pathloss offset value set 1 may be indicated via the DCI.

As can be seen that the above manner 1 only needs to configure one pathloss offset value set, while manner 2 needs to configure multiple pathloss offset value sets. Manner 2 is more flexible, but the mapping manner with DCI fields will be more complicated.

In some implementations, for the above manner 1, the RRC signaling is used to configure a pathloss offset value set; and the DCI is used to indicate the pathloss offset value corresponding to the first network device in the pathloss offset value set. For example, an SRI field, other existing fields or a newly added field in the DCI may be adopted to indicate the pathloss offset value corresponding to the first network device in the pathloss offset value set.

In this case, the second network device further transmits mapping relationship information to the terminal device, for example, the mapping relationship information may be first information. The terminal device receives the mapping relationship information (the mapping relationship information may be RRC information), and the mapping relationship information is used to indicate a mapping relationship between a state value of the SRI field and a pathloss offset value in the pathloss offset value set. For example, the RRC signaling is used to configure a pathloss offset value set, and the pathloss offset value set includes pathloss offset value 0, pathloss offset value 1, pathloss offset value 2 and pathloss offset value 3. The DCI is used to indicate a mapping relationship between each state value of the SRI field in the DCI and each pathloss offset value in the pathloss offset value set. For example, the value of the SRI field is 00, indicating that pathloss offset value 0 is included; the value of the SRI field is 01, indicating that pathloss offset value 1 is included; the value of the SRI field is 10, indicating that pathloss offset value 2 is included; and the value of the SRI field is 11, indicating that pathloss offset value 3 is included.

The terminal device determines the pathloss offset value corresponding to the first network device according to the RRC signaling, the mapping relationship information and the DCI. For example, if the terminal device receives the DCI and the value of the SRI field in the DCI is 11, it indicates that the second network device configures pathloss offset value 3 for the terminal device, in which pathloss offset value 3 is from the pathloss offset value set configured by the RRC signaling.

Taking the uplink information being the PUSCH as an example, when the RRC signaling is used to configure a pathloss offset value set, the network device transmits the mapping relationship information to the terminal device (the mapping relationship information may be RRC information). For example, the mapping relationship information may be second information. The mapping relationship information is used to configure a mapping relationship between the pathloss offset value and the state value of the SRI field in the DCI. For example, the mapping relationship information may include one or more of:

(1) a SRI-PUSCH power control index;
(2) a pathloss reference signal of the PUSCH; or
(3) a pathloss offset value of the PUSCH.

An example of the RRC structure is as follows:

```
SRI-PUSCH-PowerControl ::=          SEQUENCE {
    sri-PUSCH-PowerControlId              SRI-PUSCH-PowerControlId,

    sri-PUSCH-PathlossReferenceRS-Id     PUSCH-PathlossReferenceRS-Id,
    sri-pathloss-delta-Id               pathloss-delta-Id}
```

The pathloss offset value is indicated by the SRI field in the DCI. Each state value of the SRI in the DCI corresponds to an index of a pathloss offset value, and the pathloss offset values associated with the PUSCH are dynamically indicated by different state values of the SRI.

In some implementations, for the above manner 2, the RRC signaling is used to configure multiple pathloss offset value sets, and different pathloss offset value sets are associated with different pieces of spatial information. The DCI is used to indicate the pathloss offset value corresponding to the first network device in each pathloss offset value set. For example, the SRI field in the DCI may be adopted to indicate the pathloss offset value corresponding to the first network device in each pathloss offset value set.

In this case, the terminal device receives mapping relationship information (the mapping relationship information may include RRC information), and the mapping relationship information is used to indicate a mapping relationship between a state value of the SRI field and a pathloss offset value in the pathloss offset value set.

The terminal device determines a pathloss offset value set applied by the first network device.

The terminal device determines the pathloss offset value corresponding to the first network device from the pathloss offset value set applied by the first network device based on the RRC signaling, the mapping relationship information and the DCI.

Taking the uplink information as the PUSCH as an example, when multiple pathloss offset value sets are configured and the multiple pathloss offset value sets correspond to multiple uplink TRPs one-to-one, the network device transmits the mapping relationship information to the terminal device (the mapping relationship information may be RRC information), and the mapping relationship information is used to configure a mapping relationship between the pathloss offset value in each pathloss offset value set and the state value of the SRI field in the DCI.

The network device transmits the DCI to the terminal device, and the SRI in the DCI is used to indicate the corresponding pathloss offset value.

The terminal device first determines the pathloss offset value set applied by the uplink TRP through the TCI state or the SRS resource set. Then, the terminal device determines the pathloss offset value associated with the PUSCH based on the mapping relationship information and the SRI field in the DCI. Each state value of the SRI field in the DCI corresponds to an index of a pathloss offset value, and the pathloss offset values associated with the PUSCH are dynamically indicated by different state values of the SRI field.

For example, the second network device configures two pathloss offset value sets via the RRC, where pathloss offset value set 0 is associated with spatial information 0, and pathloss offset value set 1 is associated with spatial information 1. The second network device transmits the mapping relationship information and the DCI to the terminal device. When transmitting the uplink information to the uplink TRP, the terminal device first determines the pathloss offset value set applied by the TRP based on the TCI state or the SRS resource set of the uplink TRP. Assuming that the TCI state or the SRS resource set of the uplink TRP matches spatial information 0, the pathloss offset value for the uplink TRP will be determined from pathloss offset value set associated with spatial information 0 (i.e., pathloss offset value set 0). Furthermore, the pathloss offset value indicated by the DCI may be determined from the pathloss offset value set 0 according to the mapping relationship information and the DCI, and the pathloss offset value is a pathloss offset value configured by the second network device for the uplink TRP.

The above Embodiments I to III introduce manners in which the second network device configures the pathloss offset value for the terminal device. The pathloss offset may be used to determine the pathloss when the terminal device transmits the uplink information to the first network device. The first network device may include an uplink TRP, and the second network device may be a device different from the first network device.

The following describes the manners for the second network device to determine the pathloss offset value.

Embodiment IV

In the present embodiment, the terminal device transmits an SRS to one or more first network devices (e.g., uplink TRPs) with a first power. Each first network device receives the SRS and transmits a received power of the SRS and a transmit power of the SRS (i.e., a first power) to a second network device (e.g., a macro base station, other TRPs different from the first network device or the like); or each first network device transmits a difference between the transmit power of the SRS (i.e., a first power) and the received power of the SRS to the second network device. In this way, the second network device may determine the pathloss between the terminal device and the first network device, and then determine a pathloss offset value by combining a pathloss between the terminal device and the second network device. The pathloss offset value may be determined in the following manners:

the pathloss offset value = the pathloss between the terminal device and the second network device -the pathloss between the terminal device and the first network device; or
the pathloss offset value = the pathloss between the terminal device and the first network device -the pathloss between the terminal device and the second network device.

For the pathloss between the terminal device and the second network device, at least the following manners may be adopted.

Manner 1

The terminal device transmits the SRS to the second network device; and accordingly, the second network device may calculate the pathloss between the terminal device and the second network device according to the transmit power and the received power of the SRS.

Manner 2

The terminal device transmits the pathloss between the terminal device and the second network device to the second network device. The pathloss may be determined according to the CSI-RS or the SSB. Alternatively, the terminal device may transmit a layer 1 RSRP value or a layer 3 filtered RSRP value to the second network device, and the second network device may determine the pathloss between the terminal device and the second network device according to the layer 1 RSRP value or the layer 3 filtered RSRP value and a transmit power of the CSI-RS or a transmit power of the SSB.

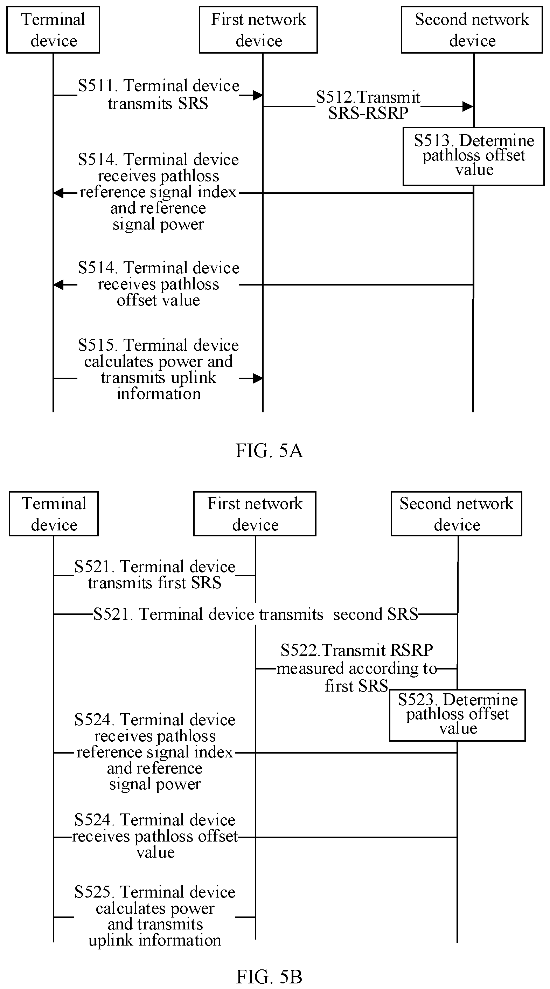

FIG. 5A is an implementation flowchart I of Embodiment IV of the present application. In the present embodiment, the first network device may be specifically a TRP (or a distributed TRP), and the second network device may be specifically a macro base station, a base station or a TRP different from the first network device. For ease of introduction, FIG. 5A illustrates an example of determining and configuring a pathloss offset value for the first network device; and for a case of multiple first network devices, the pathloss offset value may be determined and configured for each first network device by the manner illustrated in FIG. 5A. As illustrate in FIG. 5A, the process includes the following steps.

In S511, a terminal device transmits an SRS to a first network device.

In S512, the first network device receives the SRS, measures an RSRP value of the SRS, and transmits the RSRP of the SRS to a second network device. In some examples, the first network device may further transmit a transmit power of the SRS to the second network device. The transmit power of the SRS may be stored by the first network device in advance, or transmitted by the terminal device to the first network device. Alternatively, the first network device may transmit a difference between the transmit power of the SRS and the RSRP of the SRS to the second network device.

In S513, the second network device may determine a pathloss between the terminal device and the first network device according to the transmit power of the SRS and the RSRP of the SRS, or according to the difference between the transmit power of the SRS and the RSRP of the SRS. The second network device determines a pathloss offset value according to the pathloss between the terminal device and the first network device and a pathloss between the terminal device and the second network device. The pathloss offset value is equal to a difference between the above two pathlosses.

In S514, the second network device transmits pathloss information to the terminal device. The pathloss information includes the pathloss offset value. The pathloss information may further include a pathloss reference signal index and/or a reference signal power. This step may refer to the configuration method for the pathloss offset value introduced in the above Embodiments I to III, which will not be repeated here.

In S515, the terminal device calculates a transmit power when transmitting uplink information according to the pathloss offset value, and transmits the uplink information.

FIG. 5B is an implementation flowchart II of Embodiment IV of the present application. In the present embodiment, the first network device may specifically be a TRP (or a distributed TRP), and the second network device may specifically be a macro base station, a base station or a TRP different from the first network device. For ease of introduction, FIG. 5B illustrates an example of determining and configuring a pathloss offset value for the first network device; and for a case of multiple first network devices, the pathloss offset value may be determined and configured for each first network device by the manner illustrated in FIG. 5B. As illustrated in FIG. 5B, the process includes the following steps.

In S521, a terminal device transmits a first SRS to a first network device, and transmits a second SRS to a second network device.

In S522, the first network device receives the first SRS, measures an RSRP value of the first SRS, and transmits the RSRP of the first SRS to the second network device. In some examples, the first network device may further transmit a transmit power of the first SRS to the second network device. The transmit power of the first SRS may be transmitted by an uplink first network device or the terminal device to the first network device in advance; or if the transmit power of the first SRS is known, the first network device does not need to transmit the transmit power of the first SRS to the second network device. Alternatively, the first network device may transmit a difference between the transmit power of the first SRS and the RSRP of the first SRS to the second network device.

In S523, the second network device determines a pathloss between the terminal device and the first network device according to the transmit power of the first SRS and the RSRP of the first SRS, or according to the difference between the transmit power of the first SRS and the RSRP of the first SRS. In addition, the second network device receives the second SRS, measures an RSRP value of the second SRS, and determines a pathloss between the terminal device and the second network device according to a transmit power of the second SRS and the RSRP value of the second SRS. The transmit power of the second SRS may be transmitted by the terminal device to the second network device; or if the transmit power of the second SRS is known, the terminal device does not need to transmit the transmit power of the second SRS to the second network device. Then, the second network device determines a pathloss offset value according to the pathloss between the terminal device and the first network device and the pathloss between the terminal device and the second network device. The pathloss offset value is equal to a difference between the above two pathlosses.

In S524, the second network device transmits pathloss information to the terminal device. The pathloss information includes the pathloss offset value. The pathloss information may further include a pathloss reference signal index and/or a reference signal power. This step may refer to the configuration method for the pathloss offset value introduced in the above Embodiments I to III, which will not be repeated here.

In S525, the terminal device calculates a transmit power when transmitting uplink information according to the pathloss offset value, and transmits the uplink information.

In the above process, a power (i.e., the above first power) when the terminal device transmits the SRS (e.g., the first SRS) to the first network device may be determined by using at least the following two manners.

> Manner 1: the first power is a fixed power, such as the first power is a predefined power, or the first power is configured by third information;
> Manner 2: the first power is determined by open-loop power control.

The following will be described in detail.

Manner 1: an SRS for obtaining a pathloss offset value is transmitted by using the fixed power.

In some implementations, the terminal device transmits an SRS for adjusting a pathloss with a first power. The first power may be a predefined power value, or the first power is configured by the network device through third information; and the third information may be carried by RRC signaling or a MAC CE.

For example, the first power is a predefined power value, such as a maximum transmit power, 1/m of the maximum transmit power, the maximum transmit power -n dB, or a fixed power value. The 1/m of the maximum transmit power may be understood as scaling down the maximum transmit power proportionally. For different uplink TRPs, the values of m may be different, and m is a positive integer. The maximum transmit power -n dB may be understood as reducing the maximum transmit power by n dB as the first power. For different uplink TRPs, the values of n dB may be different, and n is a positive integer. As such, the first power is known to the terminal device and the network device.

For another example, the first power is configured or indicated by the network device according to channel quality, for example, configured or indicated via RRC signaling or a MAC CE. The network device directly configures the first power for the terminal device, for example, the network device configures the first power via p bits in the RRC signaling or the MAC CE. The configured step may be k dB, where k is a positive integer, such as k=3.

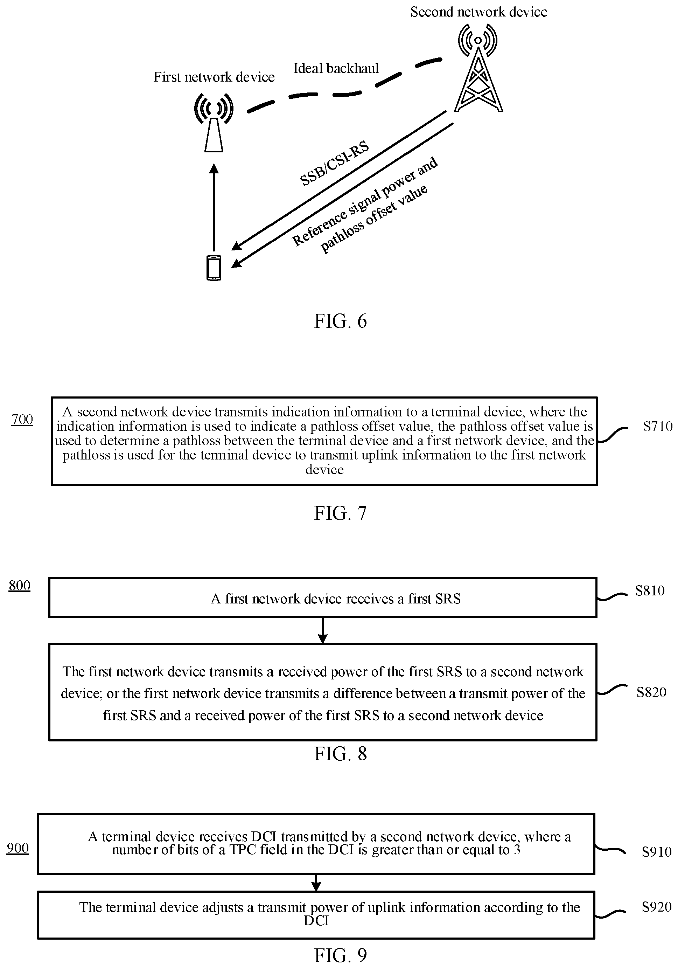

If the terminal device transmits the SRS to the first network device (e.g., the uplink TRP), the first network device (e.g., the uplink TRP) will interact with the second network device (e.g., a macro base station, other TRPs different from the first network device or the like) the RSRP value obtained from measuring the SRS, or interact with the second network device the difference between the first power and the SRS RSRP. The second network device determines the pathloss between the terminal device and the first network device according to the difference between the first power of the SRS and the SRS RSRP, then determines the pathloss offset value by combining the pathloss between the terminal device and the second network device, and configures the pathloss offset value to the terminal device through any manner in Embodiments I to III. As illustrated in FIG. 6, the terminal device transmits the SRS to the first network device with the first power. The first network device transmits the first power and the RSRP value of the SRS to the second network device or transmits the difference between the first power and the RSRP value of the SRS to the second network device, via the ideal backhaul link. The second network device may determine the pathloss between the terminal device and the first network device according to the received information. The second network device transmits the SSB/CSI-RS to the terminal device. The terminal device determines the pathloss between the terminal device and the second network device by using the SSB/CSI-RS, and transmits the pathloss between the terminal device and the second network device to the second network device. The second network device may determine the pathloss offset value by using the pathloss between the terminal device and the first network device and the pathloss between the terminal device and the second network device, and configure the reference signal power and the pathloss offset value for the terminal device.

The manner of transmitting the SRS by using the fixed power does not require the terminal device to calculate the power of the SRS, which reduces the complexity of power calculation and makes implementation simpler.

Manner 2: the power of the SRS is determined by using open-loop power control.

The power of the SRS is determined by the following formula:

$$P_{\mathrm{SRS},b,f,c}(i,q_s) = \min\left\{\begin{array}{l} P_{\mathrm{CMAX},f,c}(i), \\ P_{\mathrm{O\_SRS},b,f,c}(q_s) + 10\log_{10}(2^{\mu} \cdot M_{\mathrm{SRS},b,f,c}(i)) + \alpha_{\mathrm{SRS},b,f,c}(q_s) \cdot PL_{b,f,c}(q_d) \end{array}\right\}$$

As can be seen from the above formula, the closed-loop power is adjusted to 0, and the power of the SRS is determined by using open-loop power control only.

Where Po is a target power associated with one or more uplink TRPs configured by the network device, and the pathloss is determined according to the specific downlink reference signal configured by the network device.

This manner requires the terminal device to calculate the transmit power of the SRS by itself. It is more complex than manner 1, but the power value of the SRS is more accurate.

In the above process, a power when the terminal device transmits the SRS (e.g., the second SRS) to the second network device may be determined by using the following three manners.

Manner 1: the pathloss between the terminal device and the second network device is calculated according to the pathloss reference signal configured by the second network device, and the transmit power of the second SRS is determined according to the pathloss.

Manner 2: the transmit power of the second SRS is a fixed power. The specific content may refer to the above manner 1 for determining the transmit power of the first SRS, which will not be repeated here.

Manner 3: the transmit power of the second SRS is determined by open-loop power control. The specific content may refer to the above manner 2 for determining the transmit power of the first SRS, which will not be repeated here.

The embodiments of the present application further provide a communication method, and the method may be applied to a second network device and is used to configure or indicate a pathloss offset value to a terminal device. The pathloss offset value is used to determine pathloss(es) between the terminal device and one or more first network devices. The second network device is a device different from the first network device. The first network device may include TRP(s) in a distributed communication system, and the second network device may include a base station, a macro base station, a TRP different from the first network device or the like. As illustrated in FIG. 7, FIG. 7 is a schematic flowchart of a communication method 700 according to an embodiment of the present application. Optionally, the method may be applied to the system illustrated in FIG. 1 or FIG. 2, but is not limited thereto. The method includes at least part of the following.

In S710, a second network device transmits indication information to a terminal device, where the indication information is used to indicate a pathloss offset value, the pathloss offset value is used to determine a pathloss between the terminal device and a first network device, and the pathloss is used for the terminal device to transmit uplink information to the first network device.

The first network device may include a TRP, such as a distributed TRP.

The second network device may include a macro base station, a base station or a TRP different from the first network device.

In some embodiments, the second network device may configure or indicate pathloss information to the terminal device, where the pathloss information includes the pathloss offset value, and may further include a pathloss reference signal index and/or a reference signal power; where

the pathloss reference signal index may be configured by the second network device via radio resource control (RRC) signaling, or updated via a media access control (MAC) control element (CE), or determined by a preset rule, or dynamically mapped via an SRS resource indicator (SRI) field in downlink control information (DCI). It is to be noted that the network device is a device different from one or more uplink TRPs; and

the reference signal power may be determined according to a reference signal power configured by the second network device. The reference signal power is a transmit power of the pathloss reference signal, such as, may be a transmit power of the CSI-RS, a transmit power of the SSB, or a transmit power of the PRS.

In some implementations, the pathloss offset value is associated with one or more of following transmission parameters:

a type of uplink information;
a pathloss reference signal index;
an SRS resource indicator index; or
spatial information.

In some implementations, the spatial information includes at least one of: SRS resource set information, transmission configuration indicator (TCI) state information, antenna panel information, control resource set (CORESET) group information, beam information, or reference signal resource information.

In some implementations, the pathloss reference signal index includes one or more of: a CSI-RS index, a CSI-RS resource index, an SSB index, an SSB resource index, a PRS index, or a PRS resource index.

In some embodiments, the indication information includes radio resource control (RRC) signaling; or

the indication information includes a MAC CE; or
the indication information includes RRC signaling and downlink control information (DCI).

In some implementations, the RRC signaling is used to configure a pathloss offset value set.

The DCI is used to indicate a pathloss offset value corresponding to the first network device in the pathloss offset value set. For example, an SRI field or a newly added field in the DCI is used to indicate the pathloss offset value corresponding to the first network device in the pathloss offset value set.

In some implementations, the second network device transmits mapping relationship information to the terminal device, where the mapping relationship information is used to indicate a mapping relationship between a state value of the SRI field and a pathloss offset value in the pathloss offset value set.

Specifically, the RRC signaling may configure one or more pathloss offset value sets. If multiple pathloss offset value sets are configured, different pathloss offset value sets are associated with different pieces of spatial information; and the DCI is used to indicate the pathloss offset value corresponding to the first network device in each pathloss offset value set. For example, the SRI field in the DCI is used to indicate the pathloss offset value corresponding to the first network device in each pathloss offset value set.

The specific manner in which the second network device configures and/or indicates the pathloss offset value may refer to above Embodiments I to III, which will not be repeated here.

In some implementations, the second network device determines the pathloss offset value according to a first pathloss and a second pathloss; where the first pathloss includes pathloss(es) between the terminal device and one or more first network devices, and the second pathloss includes a pathloss between the terminal device and the second network device.

Other implementations of the second network device may refer to the contents related to the second network device in the above embodiments, which will not be repeated here.

The embodiments of the present application further provide a communication method, which may be applied to a first network device (e.g., a TRP). As illustrated in FIG. 8, FIG. 8 is a schematic flowchart of a communication method 800 according to an embodiment of the present application. Optionally, the method may be applied to the system illustrated in FIG. 1 or FIG. 2, but is not limited thereto. The method includes at least part of the following.

In S810, a first network device receives a first SRS.

In S820, the first network device transmits a received power of the first SRS to a second network device; or the first network device transmits a difference between a transmit power of the first SRS and a received power of the first SRS to a second network device. Alternatively, the first network device transmits the received power of the first SRS to the second network device, and this manner is applicable to a case where the transmit power of the first SRS is known, so that the first network device does not need to transmit the transmit power of the first SRS to the second network device.

The second network device is a device different from the first network device. For example, the first network device includes a TRP, such as a distributed TRP, and the second network device includes a base station, a macro base station or a TRP.

The first network device may receive the first SRS from the terminal device, and transmits the received power of the first SRS and the transmit power of the first SRS to the second network device, or transmits the difference between the transmit power of the first SRS and the received power of the first SRS to the second network device, or transmits the received power of the first SRS to the second network device, to enable the second network device to determine the pathloss between a network device and the first network device, so as to further determine a pathloss offset value. The received power of the first SRS may refer to a measured value when the first network device receives the first SRS, that is, an RSRP value of the first SRS.

Other implementations of the first network device may refer to the contents related to the first network device in the above embodiments, which will not be repeated here.

In the above content, the method in which the terminal device determines the pathloss between the terminal device and the first network device according to the pathloss offset value and then adjusts the transmit power when transmitting the uplink information to the first network device is introduced. The embodiments of the present application also provides a communication method, and the communication method is used to adjust the transmit power when the terminal device transmits the uplink information to an uplink TRP through closed-loop power control. In order to improve the efficiency of power adjustment and save the overhead of DCI (DCI can be used for closed-loop power adjustment), in the method proposed in the embodiments of the present application, the numerical range of closed-loop power adjustment is expanded.

FIG. 9 is an implementation flowchart of a communication method 900 according to an embodiment of the present application, which includes the following.

In S910, a terminal device receives DCI transmitted by a second network device, where a number of bits of a TPC field in the DCI is greater than or equal to 3.

In S920, the terminal device adjusts a transmit power of uplink information according to the DCI.

In some implementations, the terminal device transmits uplink information to a first network device or the second network device using an adjusted transmit power.

For example, the first network device may include a TRP, and the second network device may include a base station, a macro base station or a TRP different from the first network device.

In some implementations, an absolute power adjustment value indicated by the TPC field meets following condition:

the absolute power adjustment value is a positive value; or
the absolute power adjustment value is greater than or equal to 8dB; or
the absolute power adjustment value is a negative value; or
the absolute power adjustment value is less than or equal to -8dB.

In some implementations, an accumulated power adjustment value indicated by the TPC field meets following condition:

the accumulated power adjustment value is a negative value; or
the accumulated power adjustment value is less than or equal to -3dB.

The absolute power adjustment value and the accumulated power adjustment value indicated by the TPC field may be any integer value that meets the condition. For example, the absolute power adjustment value may be any integer value greater than or equal to 8dB, such as 9dB, 10dB, 15dB. For another example, the accumulated power adjustment value may be any integer value less than or equal to -3dB, such as -4dB, -6dB, -8dB, -9dB. The absolute power adjustment value and the accumulated power adjustment value indicated by the TPC field may also be values that meet a certain rule, for example, the absolute power adjustment value and the accumulated power adjustment value are multiples of 3, multiples of 4, multiples of 6, multiples of 8 or the like.

In an example, for the PUSCH or SRS, the number of bits of the TPC field is 3 bits, and the adjustment ranges of the accumulated power adjustment value and the absolute power adjustment value are increased, as shown in Table 1. In Table 1, the added contents include: (1) the value of the TPC field is 4, indicating that the accumulated power adjustment value of the PUSCH or SRS is -12dB and the absolute power adjustment value of the PUSCH or the SRS is -12dB; (2) the value of the TPC field is 5, indicating that the accumulated power adjustment value of the PUSCH or the SRS is -9dB and the absolute power adjustment value of the PUSCH or the SRS is -8dB; (3) the value of the TPC field is 6, indicating that the accumulated power adjustment value of the PUSCH or the SRS is -6, and the absolute power adjustment value of the PUSCH or the SRS is 8dB; and (4) the value of the TPC field is 7, indicating that the accumulated power adjustment value of the PUSCH or the SRS is -3dB and the absolute power adjustment value of the PUSCH or the SRS is 12dB.

Table 1

| TPC Command Field | Accumulated $\delta_{PUSCH,b,f,c}$ or $\delta_{SRS,b,f,c}$ [dB] | Absolute $\delta_{PUSCH,b,f,c}$ or $\delta_{SRS,b,f,c}$ [dB] |
|---|---|---|
| 0 | -1 | -4 |
| 1 | 0 | -1 |
| 2 | 1 | 1 |
| 3 | 3 | 4 |
| 4 | -12 | -12 |
| 5 | -9 | -8 |
| 6 | -6 | 8 |
| 7 | -3 | 12 |

In an example, for the PUCCH, the number of bits of the TPC field is extended to 3 bits, and the adjustment range of negative values is increased, as shown in Table 2. In Table 2, the added contents include: (1) the value of the TPC field is 4, indicating that the accumulated power adjustment value of the PUCCH is -12dB; (2) the value of the TPC field is 5, indicating that the accumulated power adjustment value of the PUCCH is -9dB; (3) the value of the TPC field is 6, indicating that the accumulated power adjustment value of the PUCCH is -6dB; and (4) the value of the TPC field is 7, indicating that the accumulated power adjustment value of the PUCCH is -3dB.

Table 2

| TPC Command Field) | Accumulated $\delta_{PUCCH,b,f,c}$ [dB] |
|---|---|
| 0 | -1 |
| 1 | 0 |
| 2 | 1 |
| 3 | 3 |
| 4 | -12 |
| 5 | -9 |
| 6 | -6 |
| 7 | -3 |

In the embodiments of the present application, different uplink TRPs may correspond to different closed-loop adjustment states, and each closed-loop adjustment state may correspond to a respective TPC. The number of increased closed-loop adjustment states is greater than 2, such as 4.

By expanding the number of bits of the TPC field in the DCI to be greater than or equal to 3, power adjustment values with a larger numerical range (including the absolute power adjustment value and the accumulated power adjustment value) may be indicated, so that the number of closed-loop power adjustments is reduced and an appropriate power value can be achieved through fewer adjustments, thereby saving the overhead of the DCI.

The DCI used by the terminal device when performing closed-loop power adjustment may be transmitted by the network device. For example, the second network device transmits the DCI to the terminal device, and the number of bits of the TPC field in the DCI is greater than or equal to 3; the DCI is used for the terminal device to determine the transmit power of uplink information. The characteristics of the absolute power adjustment value and the accumulated power adjustment value indicated by the TPC field have been introduced in the above content, which will not be repeated here.

In some implementations, in a distributed deployment network, the second network device (e.g., a macro base station or a TRP) transmits the DCI to the terminal device. The DCI is used for the terminal device to adjust the transmit power of uplink information using the closed-loop power control adjustment manner. The uplink information is information transmitted by the terminal device to one or more first network devices (e.g., uplink TRPs); and the number of bits of the TPC field in the DCI is greater than or equal to 3.

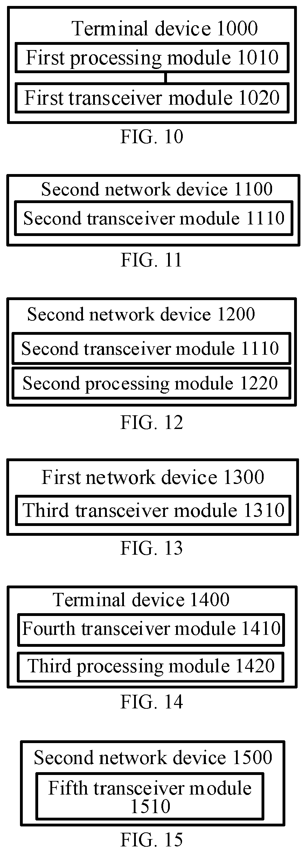

The embodiments of the present application further provide a terminal device. FIG. 10 is a schematic block diagram of a terminal device 1000 according to an embodiment of the present application. The terminal device 1000 may include:

a first processing module 1010, configured to determine a pathloss between the terminal device and a first network device according to a pathloss offset value; and
a first transceiver module 1020, configured to transmit uplink information to the first network device based on the pathloss.

In some implementations, the first transceiver module 1020 is further configured to receive indication information transmitted by a second network device, and the indication information is used to indicate the pathloss offset value.

In some implementations, the pathloss offset value is associated with one or more of following transmission parameters:

a type of uplink information;
a pathloss reference signal index;
an SRS resource indicator index; or
spatial information.

In some implementations, the spatial information includes at least one of:

SRS resource set information;

TCI state information;
antenna panel information;
CORESET group information;
beam information; or
reference signal resource information.

In some implementations, the pathloss reference signal index includes one or more of: a CSI-RS index, a CSI-RS resource index, an SSB index, an SSB resource index, a PRS index or a PRS resource index.

In some implementations, the first network device is associated with one or more of the transmission parameters.

In some implementations, the first processing module 1010 is configured to determine a pathloss offset value associated with the uplink information according to one or more of transmission parameters associated with the uplink information; and determine the pathloss between the terminal device and the first network device according to the pathloss offset value associated with the uplink information.

In some implementations, the indication information includes RRC signaling; or

the indication information includes a MAC CE; or
the indication information includes RRC signaling and DCI.

In some implementations, the indication information including the RRC signaling and the DCI includes:

the RRC signaling configuring a pathloss offset value set; and
the DCI indicating a pathloss offset value corresponding to the uplink information in the pathloss offset value set.

In some implementations, the DCI indicating the pathloss offset value corresponding to the uplink information in the pathloss offset value set includes:
an SRI field or a newly added field in the DCI indicating the pathloss offset value corresponding to the uplink information in the pathloss offset value set.

In some implementations, the first transceiver module 1020 is further configured to receive mapping relationship information, and the mapping relationship information indicates a mapping relationship between a state value of an SRI field and a pathloss offset value in the pathloss offset value set; and
the first processing module is configured to determine the pathloss offset value corresponding to the uplink information according to the RRC signaling, the mapping relationship information and the DCI.

In some implementations, the first transceiver module 1020 is further configured to receive mapping relationship information, and the mapping relationship information indicates a mapping relationship between a state value of an SRI field and a pathloss offset value in the pathloss offset value set; and
the first processing module 1010 is configured to determine a pathloss offset value set applied by the first network device; and the terminal device determines the pathloss offset value corresponding to the uplink information according to the RRC signaling, the mapping relationship information and the DCI.

In some implementations, the first transceiver module 1020 is further configured to transmit a first SRS to the first network device with a first power, and the first SRS is used to determine the pathloss offset value.

In some implementations, the first power is a predefined power; or
the first power is configured by third information.

In some implementations, the third information is carried by RRC signaling or a MAC CE.

In some embodiments, the first power is determined by open-loop power control.

In some implementations, the first transceiver module 1020 is further configured to transmit a second SRS to a second network device; or transmit a pathloss between the terminal device and a second network device to the second network device.

In some implementations, the uplink information includes at least one of: PUSCH information, PUCCH information, SRS information, or PRACH information.

The terminal device 1000 in the embodiments of the present application is capable of implementing the corresponding functions of the terminal device in the above method embodiments. The procedures, functions, implementations and beneficial effects corresponding to various modules (sub-modules, units or components) in the terminal device 1000 may refer to the corresponding description in the above method embodiments and will not be repeated here. It should be noted that the functions described with respect to the various modules (sub-modules, units or components) of the terminal device 1000 in the embodiments of the present application may be implemented by different modules (sub-modules, units or components) or implemented by the same module (sub-module, unit or component).

The embodiments of the present application further provide a second network device. FIG. 11 is a schematic block diagram of a second network device 1100 according to an embodiment of the present application. The second network device 1100 may include:

a second transceiver module 1110, configured to transmit indication information to a terminal device, where the indication information is used to indicate a pathloss offset value, the pathloss offset value is used to determine a pathloss between the terminal device and a first network device, and the pathloss is used for the terminal device to transmit uplink information to the first network device.

In some implementations, the pathloss offset value is associated with one or more of following transmission parameters:

a type of uplink information;
a pathloss reference signal index;
an SRS resource indicator index; or
spatial information.

In some implementations, the spatial information includes at least one of:

SRS resource set information;
TCI state information;
antenna panel information;
CORESET group information;
beam information; or
reference signal resource information.

In some implementations, the pathloss reference signal index includes one or more of: a CSI-RS index, a CSI-RS resource index, an SSB index, an SSB resource index, a PRS index, or a PRS resource index.

In some implementations, the indication information includes RRC signaling; or

the indication information includes a MAC CE; or
the indication information includes RRC signaling and DCI.

In some implementations, the indication information including the RRC signaling and the DCI includes:

the RRC signaling configuring a pathloss offset value set; and
the DCI indicating a pathloss offset value corresponding to the uplink information in the pathloss offset value set.

In some implementations, the DCI indicating the pathloss offset value corresponding to the uplink information in the pathloss offset value set includes:
an SRI field or a newly added field in the DCI indicating the pathloss offset value corresponding to the uplink information in the pathloss offset value set.

FIG. 12 is a schematic block diagram of a second network device 1200 according to an embodiment of the present application. As illustrated in FIG. 12, the second network device 1200 includes the second transceiver module 1110, and further includes:
a second processing module 1220, configured to transmit mapping relationship information to the terminal device, where the mapping relationship information indicates a mapping relationship between a state value of an SRI field and a pathloss offset value in the pathloss offset value set.

In some implementations, the second processing module 1220 is further configured to:

determine the pathloss offset value according to a first pathloss and a second pathloss; where
the first pathloss includes pathloss(es) between the terminal device and one or more first network devices; and
the second pathloss includes a pathloss between the terminal device and the second network device.

The second network device 1100 and the second network device 1200 in the embodiments of the present application are capable of implementing the corresponding functions of the second network device in the above method embodiments. The procedures, functions, implementations and beneficial effects corresponding to various modules (sub-modules, units or components) in the second network device 1100 and the second network device 1200 may refer to the corresponding description in the above method embodiments and will not be repeated here. It should be noted that the functions described with respect to the various modules (sub-modules, units or components) of the second network device 1100 and the second network device 1200 in the embodiments of the present application may be implemented by different modules (sub-modules, units or components) or implemented by the same module (sub-modules, units or components).

The embodiments of the present application further provide a first network device. FIG. 13 is a schematic block diagram of a first network device 1300 according to an embodiment of the present application. The first network device 1300 may include: a third transceiver module 1310, configured to:

receive a first SRS; and
transmit a received power of the first SRS to a second network device; or transmit a difference between a transmit power of the first SRS and a received power of the first SRS to a second network device.

The first network device 1300 in the embodiments of the present application is capable of implementing the corresponding functions of the first network device in the above method embodiments. The procedures, functions, implementations and beneficial effects corresponding to various modules (sub-modules, units or components) in the first network device 1300 may refer to the corresponding description in the above method embodiments and will not be repeated here. It should be noted that the functions described with respect to the various modules (sub-modules, units or components) of the first network device 1300 in the embodiments of the application may be implemented by different modules (sub-modules, units or components) or implemented by the same module (sub-module, unit or component).

The embodiments of the present application further provide a terminal device. FIG. 14 is a schematic block diagram of a terminal device 1400 according to an embodiment of the present application. The terminal device 1400 may include:

a fourth transceiver module 1410, configured to receive DCI transmitted by a second network device, where a number of bits of a TPC field in the DCI is greater than or equal to 3; and
a third processing module 1420, configured to adjust a transmit power of uplink information according to the DCI.

In some implementations, the fourth transceiver module 1410 is further configured to transmit uplink information to a first network device or the second network device using an adjusted transmit power.

In some implementations, an absolute power adjustment value indicated by the TPC field meets following condition:

the absolute power adjustment value is a positive value; or
the absolute power adjustment value is greater than or equal to 8dB; or
the absolute power adjustment value is a negative value; or
the absolute power adjustment value is less than or equal to -8dB.

In some implementations, an accumulated power adjustment value indicated by the TPC field meets following condition:

the accumulated power adjustment value is a negative value; or
the accumulated power adjustment value is less than or equal to -3dB.

The terminal device 1400 in the embodiments of the present application is capable of implementing the corresponding functions of the terminal device in the above method embodiments. The procedures, functions, implementations and beneficial effects corresponding to various modules (sub-modules, units or components) in the terminal device 1400 may refer to the corresponding description in the above method embodiments and will not be repeated here. It should be noted that the functions described with respect to the various modules (sub-modules, units or components) of the terminal device 1400 in the embodiments of the present application may be implemented by different modules (sub-modules, units or components) or implemented by the same module (sub-module, unit or component).

The embodiments of the present application further provide a second network device. FIG. 15 is a schematic block diagram of a second network device 1500 according to an embodiment of the present application. The second network device 1500 may include:

a fifth transceiver module 1510, configured to transmit DCI to a terminal device, where a number of bits of a TPC field in the DCI is greater than or equal to 3; and the DCI is used for the terminal device to determine a transmit power of uplink information.

In some implementations, an absolute power adjustment value indicated by the TPC field meets following condition:

the absolute power adjustment value is a positive value; or
the absolute power adjustment value is greater than or equal to 8dB; or
the absolute power adjustment value is a negative value; or

the absolute power adjustment value is less than or equal to -8dB.

In some implementations, an accumulated adjustment value indicated by the TPC field the following condition:

the accumulated power adjustment value is a negative value; or
the accumulated power adjustment value is less than or equal to -3dB.

The second network device 1500 in the embodiments of the present application is capable of implementing the corresponding functions of the terminal device in the above method embodiments. The procedures, functions, implementations and beneficial effects corresponding to various modules (sub-modules, units or components) in the second network device 1500 may refer to the corresponding description in the above method embodiments and will not be repeated here. It should be noted that the functions described with respect to the various modules (sub-modules, units or components) of the second network device 1500 in the embodiments of the present application may be implemented by different modules (sub-modules, units or components) or implemented by the same module (sub-module, unit or component).

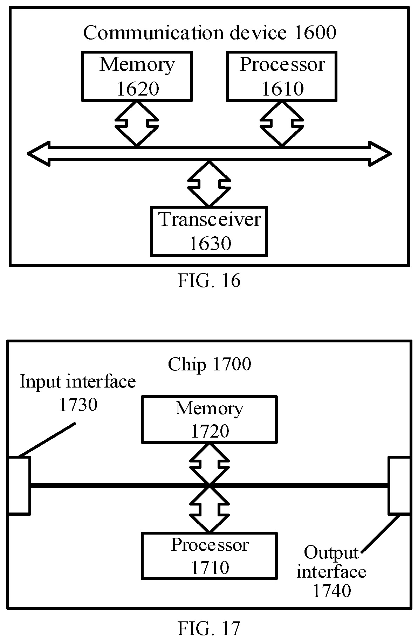

FIG. 16 is a schematic structural diagram of a communication device 1600 according to the embodiments of the present application. The communication device 1600 includes a processor 1610. The processor 1610 may be configured to invoke a computer program from a memory and run the computer program, to cause the communication device 1600 to implement the methods in the embodiments of the present application.

In an implementation, the communication device 1600 may further include a memory 1620. The processor 1610 may invoke a computer program from the memory 1620 and run the computer program, to cause the communication device 1600 to implement the methods in the embodiments of the present application.

The memory 1620 may be a separate device independent of the processor 1610, or may be integrated into the processor 1610.

In an implementation, the communication device 1600 may further include a transceiver 1630, and the processor 1610 may control the transceiver 1630 to communicate with other devices, and specifically, the transceiver 1630 may transmit information or data to other devices, or receive information or data transmitted by other devices.

The transceiver 1630 may include a transmitter and a receiver. The transceiver 1630 may further include antenna(s), and the number of antenna(s) may be one or more.

In an implementation, the communication device 1600 may be the terminal device in the embodiments of the present application, and the communication device 1600 may implement the corresponding procedures implemented by the terminal device in various methods of the embodiments of the present application, which will not be repeated here for the sake of brevity. The terminal device includes a memory, a processor and a transceiver. The memory may be configured to store a program executed by the terminal device; the processor is configured to execute the program, and specifically, the processor may be configured to execute the actions executed by the first processing module 1010 or the third processing module 1420; and the transceiver is controlled by the processor to execute the actions executed by the first transceiver module 1020 or the fourth transceiver module 1410.

In an implementation, the communication device 1600 may be the first network device in the embodiments of the present application, and the communication device 1600 may implement the corresponding procedures implemented by the first network device in various methods of the embodiments of the present application, which will not be repeated here for the sake of brevity. The first network device includes a memory, a processor, and a transceiver. The memory may be configured to store a program executed by the first network device; the processor is configured to execute the program; and the transceiver is controlled by the processor to execute the actions executed by the third transceiver module 1310.

In an implementation, the communication device 1600 may be the second network device in the embodiments of the present application, and the communication device 1600 may implement the corresponding procedures implemented by the second network device in various methods of the embodiments of the present application, which will not be repeated here for the sake of brevity. The second network device includes a memory, a processor, and a transceiver. The memory may be configured to store a program executed by the second network device; the processor is configured to the program, and specifically, the processor may be configured to execute the actions executed by the second processing module 1220; and the transceiver is controlled by the processor to execute the actions executed by the second transceiver module 1110 or the fifth transceiver module 1510.

FIG. 17 is a schematic structural diagram of a chip 1700 according to the embodiments of the present application. The chip 1700 includes a processor 1710, and the processor 1710 may be configured to invoke a computer program from a memory and run the computer program, to implement the methods in the embodiments of the present application.

In an implementation, the chip 1700 may further include a memory 1720. The processor 1710 may be configured to invoke a computer program from the memory 1720 and run the computer program, to implement the methods executed by the terminal device or the network device in the embodiments of the present application.

The memory 1720 may be a separate device independent of the processor 1710, or may be integrated into the processor 1710.

In one implementation, the chip 1700 may further include an input interface 1730. The processor 1710 may be configured to control the input interface 1730 to communicate with other devices or chips, and specifically, may be configured to obtain information or data transmitted by other devices or chips.

In an implementation, the chip 1700 may further include an output interface 1740. The processor 1710 may be configured to control the output interface 1740 to communicate with other devices or chips, and specifically, may be configured to output information or data to other devices or chips.

In an implementation, the chip may be applied to the network device in the embodiments of the present application, and the chip may implement the corresponding procedures implemented by the network device in various methods of the embodiments of the present application, which will not be repeated here for the sake of brevity.

In an implementation, the chip may be applied to the terminal device in the embodiments of the present application, and the chip may implement the corresponding procedures implemented by the terminal device in various methods of the embodiments of the present application, which will not be repeated here for the sake of brevity.

The chips applied in the network devices and the terminal device may be the same chip or different chips.

It should be understood that the chip mentioned in the embodiments of the present application may also be referred to as a system on chip, a system chip, a chip system, a system-on-chip chip, or the like.

The above processor may be a general-purpose processor, a digital signal processor (DSP), a field programmable gate array (FPGA), an application specific integrated circuit (ASIC) or other programmable logic devices, a transistor logic device, a discrete hardware component, or the like. The above general-purpose processor may be a microprocessor or may be any conventional processor, or the like.

The above memory may be a volatile memory or a non-volatile memory, or may include both the volatile memory and non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM).

It should be understood that the above memory is exemplary but not a limited illustration. For example, the memory in the embodiments of the present application may also be a static RAM (SRAM), a dynamic (RAM, DRAM), a synchronous DRAM (SDRAM), a double data rate SDRAM (DDR SDRAM), an enhanced SDRAM (ESDRAM), a synchronous link DRAM (SLDRAM) and a direct rambus RAM (DR RAM). It should be noted that the memory in the embodiments of the present application is intended to include, but not limited to, these and any other suitable types of memories.

The above embodiments may be implemented in whole or in part by software, hardware, firmware, or any combination thereof. When the above embodiments are implemented by using software, they may be implemented in the form of a computer program product in whole or in part. The computer program product includes one or more computer instructions. When computer program instructions are loaded and executed on a computer, procedures or functions according to the embodiments of the present application are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server or data center to another website site, computer, server or data center via wired (such as coaxial cable, fiber optic, digital subscriber line (DSL)) or wireless (such as infrared, radio, microwave, etc.) means. The computer-readable storage medium may be any available medium that can be accessed by the computer, or a data storage device such as including a server or a data center that integrates one or more available media. The available medium may be a magnetic medium (e.g., a floppy disk, a hard disk or a magnetic tape), an optical medium (e.g., a digital video disk (DVD)) or a semiconductor medium (e.g., a solid state disk (SSD)), or the like.

It should be understood that, in the various embodiments of the present application, the magnitude of serial numbers of the above procedures does not imply an order of execution, and the execution order of the various procedures should be determined by their function and internal logic, but should not constitute any limitation on the implementation procedures of the present application.

Those skilled in the art may clearly understand that, for the convenience and brevity of the description, the specific working procedures of the systems, apparatus and units described above may refer to the corresponding procedures in the above method embodiments, which will not be repeated here.

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

**Claims**

1. A communication method, comprising:

   determining, by a terminal device, a pathloss between the terminal device and a first network device according to a pathloss offset value; and
   transmitting, by the terminal device, uplink information to the first network device based on the pathloss.

2. The method according to claim 1, further comprising:
   receiving, by the terminal device, indication information transmitted by a second network device, wherein the indication information is used to indicate the pathloss offset value.

3. The method according to claim 1 or 2, wherein the pathloss offset value is associated with one or more of following transmission parameters:

   a type of uplink information;
   a pathloss reference signal index;
   a sounding reference signal (SRS) resource indicator index; or
   spatial information.

4. The method according to claim 3, wherein the spatial information comprises at least one of:

   SRS resource set information;
   transmission configuration indicator (TCI) state information;
   antenna panel information;
   control resource set (CORESET) group information;
   beam information; or
   reference signal resource information.

5. The method according to claim 3 or 4, wherein the pathloss reference signal index comprises one or more of: a channel state information reference signal (CSI-RS) index, a CSI-RS resource index, a synchronization signal block (SSB) index, an SSB resource index, a positioning reference signal (PRS) index, or a PRS resource index.

6. The method according to any one of claims 3 to 5, wherein the first network device is associated with one or more of the transmission parameters.

7. The method according to claim 6, wherein determining, by the terminal device, the pathloss between the terminal device and the first network device according to the pathloss offset value comprises:
   determining, by the terminal device, a pathloss offset value associated with the first network device according to the one or more of the transmission parameters associated with the first network device; and determining the pathloss between the terminal device and the first network device according to the pathloss offset value associated with the first network device.

8. The method according to claim 2, wherein

   the indication information comprises radio resource control (RRC) signaling; or
   the indication information comprises a medium access control (MAC) control element (CE); or
   the indication information comprises RRC signaling and downlink control information (DCI).

9. The method according to claim 8, wherein the indication information comprising the RRC signaling and the DCI comprises:

   the RRC signaling configuring a pathloss offset value set; and
   the DCI indicating a pathloss offset value corresponding to the first network device in the pathloss offset value set.

10. The method according to claim 9, wherein the DCI indicating the pathloss offset value corresponding to the first network device in the pathloss offset value set comprises:
    an SRS resource indicator (SRI) field or a newly added field in the DCI indicating the pathloss offset value corresponding to the first network device in the pathloss offset value set.

11. The method according to claim 9 or 10, further comprising:

receiving, by the terminal device, mapping relationship information, wherein the mapping relationship information indicates a mapping relationship between a state value of an SRI field and a pathloss offset value in the pathloss offset value set;
wherein determining, by the terminal device, the pathloss between the terminal device and the first network device according to the pathloss offset value comprises:
determining, by the terminal device, the pathloss offset value corresponding to the first network device according to the RRC signaling, the mapping relationship information and the DCI.

12. The method according to claim 9 or 10, further comprising:

receiving, by the terminal device, mapping relationship information, wherein the mapping relationship information indicates a mapping relationship between a state value of an SRI field and a pathloss offset value in the pathloss offset value set;
wherein determining, by the terminal device, the pathloss between the terminal device and the first network device according to the pathloss offset value comprises:

determining, by the terminal device, a pathloss offset value set applied by the first network device; and
determining, by the terminal device, the pathloss offset value corresponding to the first network device according to the RRC signaling, the mapping relationship information and the DCI.

13. The method according to any one of claims 1 to 12, further comprising:
transmitting, by the terminal device, a first SRS to the first network device with a first power, wherein the first SRS is used to determine the pathloss offset value.

14. The method according to claim 13, wherein

the first power is a predefined power; or
the first power is configured by third information.

15. The method according to claim 14, wherein the third information is carried by RRC signaling or a MAC CE.

16. The method according to claim 14, wherein the first power is determined by open-loop power control.

17. The method according to any one of claims 1 to 16, further comprising:

transmitting, by the terminal device, a second SRS to a second network device; or
transmitting, by the terminal device, a pathloss between the terminal device and a second network device to the second network device.

18. The method according to any one of claims 1 to 17, wherein the uplink information comprises at least one of: physical uplink shared channel (PUSCH) information, physical uplink control channel (PUCCH) information, SRS information or physical random access channel (PRACH) information.

19. A communication method, comprising:
transmitting, by a second network device, indication information to a terminal device, wherein the indication information is used to indicate a pathloss offset value, the pathloss offset value is used to determine a pathloss between the terminal device and a first network device, and the pathloss is used for the terminal device to transmit uplink information to the first network device.

20. The method according to claim 19, wherein the pathloss offset value is associated with one or more of following transmission parameters:

a type of uplink information;
a pathloss reference signal index;

a sounding reference signal (SRS) resource indicator index; or
spatial information.

21. The method according to claim 20, wherein the spatial information comprises at least one of:

SRS resource set information;
transmission configuration indicator (TCI) state information;
antenna panel information;
control resource set (CORESET) group information;
beam information; or
reference signal resource information.

22. The method according to claim 20, wherein the pathloss reference signal index comprises one or more of: a channel state information reference signal (CSI-RS) index, a CSI-RS resource index, a synchronization signal block (SSB) index, an SSB resource index, a positioning reference signal (PRS) index, or a PRS resource index.

23. The method according to any one of claims 20 to 22, wherein

the indication information comprises radio resource control (RRC) signaling; or
the indication information comprises a medium access control (MAC) control element (CE); or
the indication information comprises RRC signaling and downlink control information (DCI).

24. The method according to claim 23, wherein the indication information comprising the RRC signaling and the DCI comprises:

the RRC signaling configuring a pathloss offset value set; and
the DCI indicating a pathloss offset value corresponding to the first network device in the pathloss offset value set.

25. The method according to claim 24, wherein the DCI indicating the pathloss offset value corresponding to the first network device in the pathloss offset value set comprises:
an SRS resource indicator (SRI) field or a newly added field in the DCI indicating the pathloss offset value corresponding to the first network device in the pathloss offset value set.

26. The method according to claim 25, further comprising,
transmitting, by the second network device, mapping relationship information to the terminal device, wherein the mapping relationship information indicates a mapping relationship between a state value of the SRI field and a pathloss offset value in the pathloss offset value set.

27. The method according to any one of claims 19 to 26, further comprising,

determining, by the second network device, the pathloss offset value according to a first pathloss and a second pathloss; wherein
the first pathloss comprises pathloss(es) between the terminal device and one or more first network devices; and
the second pathloss comprises a pathloss between the terminal device and the second network device.

28. A communication method, comprising:

receiving, by a first network device, a first sounding reference signal (SRS); and
transmitting, by the first network device, a received power of the first SRS to a second network device; or
transmitting, by the first network device, a difference between a transmit power of the first SRS and a received power of the first SRS to a second network device.

29. A communication method, comprising:

receiving, by a terminal device, downlink control information (DCI) transmitted by a second network device, wherein a number of bits of a transmission power control (TPC) field in the DCI is greater than or equal to 3; and
adjusting, by the terminal device, a transmit power of uplink information according to the DCI.

30. The method according to claim 29, further comprising:
transmitting, by the terminal device, uplink information to a first network device or the second network device using an adjusted transmit power.

31. The method according to claim 29 or 30, wherein an absolute power adjustment value indicated by the TPC field meets following condition:

the absolute power adjustment value is a positive value; or
the absolute power adjustment value is greater than or equal to 8dB; or
the absolute power adjustment value is a negative value; or
the absolute power adjustment value is less than or equal to -8dB.

32. The method according to claim 29 or 30, wherein an accumulated power adjustment value indicated by the TPC field meets following condition:

the accumulated power adjustment value is a negative value; or
the accumulated power adjustment value is less than or equal to -3dB.

33. A communication method, comprising:
transmitting, by a second network device, downlink control information (DCI) to a terminal device; wherein a number of bits of a transmission power control (TPC) field in the DCI is greater than or equal to 3, and the DCI is used for the terminal device to determine a transmit power of uplink information.

34. The method according to claim 33, wherein an absolute power adjustment value indicated by the TPC field meets following condition:

the absolute power adjustment value is a positive value; or
the absolute power adjustment value is greater than or equal to 8dB; or
the absolute power adjustment value is a negative value; or
the absolute power adjustment value is less than or equal to -8dB.

35. The method according to claim 33, wherein an accumulated power adjustment value indicated by the TPC field meets following condition:

the accumulated power adjustment value is a negative value; or
the accumulated power adjustment value is less than or equal to -3dB.

36. A terminal device, comprising:

a first processing module, configured to determine a pathloss between the terminal device and a first network device according to a pathloss offset value; and
a first transceiver module, configured to transmit uplink information to the first network device based on the pathloss.

37. The terminal device according to claim 36, wherein the first transceiver module is further configured to receive indication information transmitted by a second network device, and the indication information is used to indicate the pathloss offset value.

38. The terminal device according to claim 36 or 37, wherein the pathloss offset value is associated with one or more of following transmission parameters:

a type of uplink information;
a pathloss reference signal index;
a sounding reference signal (SRS) resource indicator index; or
spatial information.

39. The terminal device according to claim 38, wherein the spatial information comprises at least one of:

SRS resource set information;
transmission configuration indicator (TCI) state information;
antenna panel information;
control resource set (CORESET) group information;
beam information; or
reference signal resource information.

40. The terminal device according to claim 38 or 39, wherein the pathloss reference signal index comprises one or more of: a channel state information reference signal (CSI-RS) index, a CSI-RS resource index, a synchronization signal block (SSB) index, an SSB resource index, a positioning reference signal (PRS) index, or a PRS resource index.

41. The terminal device according to any one of claims 38 to 40, wherein the first network device is associated with one or more of the transmission parameters.

42. The terminal device according to claim 41, wherein the first processing module is configured to determine a pathloss offset value associated with the first network device according to the one or more of the transmission parameters associated with the first network device; and determine the pathloss between the terminal device and the first network device according to the pathloss offset value associated with the first network device.

43. The terminal device according to claim 37, wherein

the indication information comprises radio resource control (RRC) signaling; or
the indication information comprises a medium access control (MAC) control element (CE); or
the indication information comprises RRC signaling and downlink control information (DCI).

44. The terminal device according to claim 43, wherein the indication information comprising the RRC signaling and the DCI comprises:

the RRC signaling configuring a pathloss offset value set; and
the DCI indicating a pathloss offset value corresponding to the first network device in the pathloss offset value set.

45. The terminal device according to claim 44, wherein the DCI indicating the pathloss offset value corresponding to the first network device in the pathloss offset value set comprises:
an SRS resource indicator (SRI) field or a newly added field in the DCI indicating the pathloss offset value corresponding to the first network device in the pathloss offset value set.

46. The terminal device according to claim 44 or 45, wherein the first transceiver module is further configured to receive mapping relationship information, and the mapping relationship information indicates a mapping relationship between a state value of an SRI field and a pathloss offset value in the pathloss offset value set; and
the first processing module is configured to determine the pathloss offset value corresponding to the first network device according to the RRC signaling, the mapping relationship information and the DCI.

47. The terminal device according to claim 44 or 45, wherein the first transceiver module is further configured to receive mapping relationship information, and the mapping relationship information indicates a mapping relationship between a state value of an SRI field and a pathloss offset value in the pathloss offset value set; and
the first processing module is configured to determine a pathloss offset value set applied by the first network device; and the terminal device determines the pathloss offset value corresponding to the first network device according to the RRC signaling, the mapping relationship information and the DCI.

48. The terminal device according to any one of claims 36 to 47, wherein the first transceiver module is further configured to transmit a first SRS to the first network device with a first power, and the first SRS is used to determine the pathloss offset value.

49. The terminal device according to claim 48, wherein

the first power is a predefined power; or
the first power is configured by third information.

50. The terminal device according to claim 49, wherein the third information is carried by RRC signaling or a MAC CE.

51. The terminal device according to claim 49, wherein the first power is determined by open-loop power control.

52. The terminal device according to any one of claims 36 to 51, wherein the first transceiver module is further configured to transmit a second SRS to a second network device; or transmit a pathloss between the terminal device and a second network device to the second network device.

53. The terminal device according to any one of claims 36 to 52, wherein the uplink information comprises at least one of: physical uplink shared channel (PUSCH) information, physical uplink control channel (PUCCH) information, SRS information or physical random access channel (PRACH) information.

54. A second network device, comprising:
a second transceiver module, configured to transmit indication information to a terminal device, wherein the indication information is used to indicate a pathloss offset value, the pathloss offset value is used to determine a pathloss between the terminal device and a first network device, and the pathloss is used for the terminal device to transmit uplink information to the first network device.

55. The second network device according to claim 54, wherein the pathloss offset value is associated with one or more of following transmission parameters:

a type of uplink information;
a pathloss reference signal index;
a sounding reference signal (SRS) resource indicator index; or
spatial information.

56. The second network device according to claim 55, wherein the spatial information comprises at least one of:

SRS resource set information;
transmission configuration indicator (TCI) state information;
antenna panel information;
control resource set (CORESET) group information;
beam information; or
reference signal resource information.

57. The second network device according to claim 55, wherein the pathloss reference signal index comprises one or more of: a channel state information reference signal (CSI-RS) index, a CSI-RS resource index, a synchronization signal block (SSB) index, an SSB resource index, a positioning reference signal (PRS) index, or a PRS resource index.

58. The second network device according to any one of claims 55 to 57, wherein

the indication information comprises radio resource control (RRC) signaling; or
the indication information comprises a medium access control (MAC) control element (CE); or
the indication information comprises RRC signaling and downlink control information (DCI).

59. The second network device according to claim 58, wherein the indication information comprising the RRC signaling and the DCI comprises:

the RRC signaling configuring a pathloss offset value set; and
the DCI indicating a pathloss offset value corresponding to the first network device in the pathloss offset value set.

60. The second network device according to claim 59, wherein the DCI indicating the pathloss offset value corresponding to the first network device in the pathloss offset value set comprises:
an SRS resource indicator (SRI) field or a newly added field in the DCI indicating the pathloss offset value corresponding to the first network device in the pathloss offset value set.

61. The second network device according to claim 59, further comprising:
a second processing module, configured to transmit mapping relationship information to the terminal device, wherein the mapping relationship information indicates a mapping relationship between a state value of an SRI field and a pathloss offset value in the pathloss offset value set.

62. The second network device according to any one of claims 54 to 61, wherein the second processing module is further configured to:

determine the pathloss offset value according to a first pathloss and a second pathloss; wherein
the first pathloss comprises pathloss(es) between the terminal device and one or more first network devices; and
the second pathloss comprises a pathloss between the terminal device and the second network device.

63. A first network device, comprising:

a third transceiver module, configured to receive a first sounding reference signal (SRS); and
transmit a received power of the first SRS to a second network device; or transmit a difference between a transmit power of the first SRS and a received power of the first SRS to a second network device.

64. A terminal device, comprising:

a fourth transceiver module, configured to receive downlink control information (DCI) transmitted by a second network device, wherein a number of bits of a transmission power control (TPC) field in the DCI is greater than or equal to 3; and
a third processing module, configured to adjust a transmit power of uplink information according to the DCI.

65. The terminal device according to claim 64, wherein the fourth transceiver module is further configured to transmit uplink information to a first network device or the second network device using an adjusted transmit power.

66. The terminal device according to claim 64 or 65, wherein an absolute power adjustment value indicated by the TPC field meets following condition:

the absolute power adjustment value is a positive value; or
the absolute power adjustment value is greater than or equal to 8dB; or
the absolute power adjustment value is a negative value; or
the absolute power adjustment value is less than or equal to -8dB.

67. The terminal device according to claim 64 or 65, wherein an accumulated power adjustment value indicated by the TPC field meets following condition:

the accumulated power adjustment value is a negative value; or
the accumulated power adjustment value is less than or equal to -3dB.

68. A second network device, comprising:
a fifth transceiver module, configured to transmit downlink control information (DCI) to a terminal device; wherein a number of bits of a transmission power control (TPC) field in the DCI is greater than or equal to 3, and the DCI is used for the terminal device to determine a transmit power of uplink information.

69. The second network device according to claim 68, wherein an absolute power adjustment value indicated by the TPC field meets following condition:

the absolute power adjustment value is a positive value; or
the absolute power adjustment value is greater than or equal to 8dB; or
the absolute power adjustment value is a negative value; or
the absolute power adjustment value is less than or equal to -8dB.

70. The second network device according to claim 68, wherein an accumulated power adjustment value indicated by the TPC field meets following condition:

the accumulated power adjustment value is a negative value; or
the accumulated power adjustment value is less than or equal to -3dB.

71. A communication device, comprising: a processor, a memory and a transceiver, wherein the memory is configured to store a computer program, and the processor is configured to invoke the computer program stored in the memory and run the computer program, and control the transceiver, to perform the method according to any one of claims 1 to 35.

72. A chip, comprising: a processor, configured to invoke a computer program from a memory and run the computer program, to cause a device equipped with the chip to perform the method according to any one of claims 1 to 35.

73. A computer-readable storage medium, configured to store a computer program, wherein the computer program, when executed by a device, causes the device to perform the method according to any one of claims 1 to 35.

74. A computer program product, comprising computer program instructions, wherein the computer program instructions cause a computer to perform the method according to any one of claims 1 to 35.

75. A computer program, wherein the computer program causes a computer to perform the method according to any one of claims 1 to 35.

**100**

FIG. 1

FIG. 2

300 | A terminal device determines a pathloss between the terminal device and a first network device according to a pathloss offset value | S310

The terminal device transmits uplink information to the first network device based on the pathloss | S320

FIG. 3

Pathloss offset
value set 0

| Pathloss offset value 0 | → | ►Uplink TRP 0 |
| Pathloss offset value 1 | → | ►Uplink TRP 1 |
| Pathloss offset value 2 | → | ►Uplink TRP 2 |
| Pathloss offset value 3 | → | ►Uplink TRP 3 |
| Pathloss offset value 4 | → | ►Uplink TRP 4 |
| Pathloss offset value 5 | → | ►Uplink TRP 5 |
| Pathloss offset value 6 | → | ►Uplink TRP 6 |
| Pathloss offset value 7 | → | ►Uplink TRP 7 |

FIG. 4A

Pathloss offset
value set 0

Pathloss offset value 0-0
Pathloss offset value 0-1
Pathloss offset value 0-2
Pathloss offset value 0-3

→ Uplink TRP 0

Pathloss offset
value set 1

Pathloss offset value 1-0
Pathloss offset value 1-1
Pathloss offset value 1-2
Pathloss offset value 1-3

→ Uplink TRP 1

FIG. 4B

| Terminal device | First network device | Second network device |
|---|---|---|

S511. Terminal device transmits SRS →

S512.Transmit SRS-RSRP →

S513. Determine pathloss offset value

← S514. Terminal device receives pathloss reference signal index and reference signal power

← S514. Terminal device receives pathloss offset value

S515. Terminal device calculates power and transmits uplink information →

FIG. 5A

| Terminal device | First network device | Second network device |
|---|---|---|

S521. Terminal device transmits first SRS

S521. Terminal device transmits second SRS

S522.Transmit RSRP measured according to first SRS

S523. Determine pathloss offset value

S524. Terminal device receives pathloss reference signal index and reference signal power

S524. Terminal device receives pathloss offset value

S525. Terminal device calculates power and transmits uplink information

FIG. 5B

Second network device

First network device    Ideal backhaul

SSB/CSI-RS

Reference signal power and pathloss offset value

FIG. 6

700 | A second network device transmits indication information to a terminal device, where the indication information is used to indicate a pathloss offset value, the pathloss offset value is used to determine a pathloss between the terminal device and a first network device, and the pathloss is used for the terminal device to transmit uplink information to the first network device    S710

FIG. 7

800 | A first network device receives a first SRS    S810

The first network device transmits a received power of the first SRS to a second network device; or the first network device transmits a difference between a transmit power of the first SRS and a received power of the first SRS to a second network device    S820

FIG. 8

900 | A terminal device receives DCI transmitted by a second network device, where a number of bits of a TPC field in the DCI is greater than or equal to 3    S910

The terminal device adjusts a transmit power of uplink information according to the DCI    S920

FIG. 9

Terminal device 1000

First processing module 1010

First transceiver module 1020

FIG. 10

Second network device 1100

Second transceiver module 1110

FIG. 11

Second network device 1200

Second transceiver module 1110

Second processing module 1220

FIG. 12

First network device 1300

Third transceiver module 1310

FIG. 13

Terminal device 1400

Fourth transceiver module 1410

Third processing module 1420

FIG. 14

Second network device 1500

Fifth transceiver module 1510

FIG. 15

Communication device 1600

Memory 1620

Processor 1610

Transceiver 1630

FIG. 16

Chip 1700

Input interface 1730

Memory 1720

Processor 1710

Output interface 1740

FIG. 17

## INTERNATIONAL SEARCH REPORT

| International application No. |
|---|
| **PCT/CN2023/112067** |

| A. | CLASSIFICATION OF SUBJECT MATTER |
|---|---|

H04W 52/24(2009.01)i

According to International Patent Classification (IPC) or to both national classification and IPC

| B. | FIELDS SEARCHED |
|---|---|

Minimum documentation searched (classification system followed by classification symbols)

IPC: H04W, H04L, H04B

Documentation searched other than minimum documentation to the extent that such documents are included in the fields searched

Electronic data base consulted during the international search (name of data base and, where practicable, search terms used)

CNTXT, VCN, ENTXT, DWPI, CNKI, 3GPP: 功率, 路损, 偏置, 偏移, 中继, 第二网络设备, SRS, power, pathloss, offset, relay, TRP

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115734265 A (BEIJING UNISOC COMMUNICATIONS TECHNOLOGY CO.,LTD.) 03 March 2023 (2023-03-03) description, paragraphs [0059]-[0169] | 1-75 |
| X | WO 2021142800 A1 (HUAWEI TECHNOLOGIES CO., LTD.) 22 July 2021 (2021-07-22) description, pages 6-20 | 1-75 |
| A | CN 114467345 A (GUANGDONG OPPO MOBILE TELECOMMUNICATIONS CORP., LTD.) 10 May 2022 (2022-05-10) entire document | 1-75 |
| A | CN 115334633 A (VIVO MOBILE COMMUNICATION CO., LTD.) 11 November 2022 (2022-11-11) entire document | 1-75 |
| A | HUAWEI et al. "R1-122525, TPC Enhancements for SRS Power Control for CoMP" *3GPP TSG RAN WG1 Meeting #69*, 25 May 2012 (2012-05-25), entire document | 1-75 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 April 2024** | **24 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/112067**

| Patent document cited in search report | | | Publication date (day/month/year) | Patent family member(s) | | | Publication date (day/month/year) |
|---|---|---|---|---|---|---|---|
| CN | 115734265 | A | 03 March 2023 | WO | 2023030019 | A1 | 09 March 2023 |
| WO | 2021142800 | A1 | 22 July 2021 | US | 2022353767 | A1 | 03 November 2022 |
| | | | | EP | 4075876 | A1 | 19 October 2022 |
| | | | | CN | 114930915 | A | 19 August 2022 |
| CN | 114467345 | A | 10 May 2022 | WO | 2021128322 | A1 | 01 July 2021 |
| CN | 115334633 | A | 11 November 2022 | | None | | |

Form PCT/ISA/210 (patent family annex) (July 2022)